(19) Europäisches Patentamt
European Patent Office
Office européen des brevets

(11) EP 2 537 903 A2

(12) **EUROPEAN PATENT APPLICATION**

(43) Date of publication:
**26.12.2012 Bulletin 2012/52**

(21) Application number: **12173198.8**

(22) Date of filing: **22.06.2012**

(51) Int Cl.:
***C09J 7/00*** *(2006.01)* ***C09J 7/02*** *(2006.01)*
***C09J 133/04*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.06.2011 JP 2011138410**

(71) Applicant: **NITTO DENKO CORPORATION**
**Osaka (JP)**

(72) Inventors:
- **Takarada, Shou**
**Ibaraki-shi, Osaka (JP)**
- **Nonaka, Takahiro**
**Ibaraki-shi, Osaka (JP)**

(74) Representative: **Grünecker, Kinkeldey,**
**Stockmair & Schwanhäusser**
**Leopoldstrasse 4**
**80802 München (DE)**

(54) **Optical double-sided pressure-sensitive adhesive sheet**

(57) The present invention provides an optical double-sided pressure-sensitive adhesive sheet excellent in step absorbability and anti-foaming release property. The invention relates to an optical double-sided pressure-sensitive adhesive sheet including a pressure-sensitive adhesive layer which contains an acrylic polymer A and an acrylic polymer B having a weight average molecular weight of from 1,000 to 30,000, and has a residual stress after 180 seconds of 3.0 $N/cm^2$ or less, the residual stress after 180 seconds being measured in accordance with a tensile stress relaxation test under the conditions of a temperature of 23 °C and a strain of 300 %.

*FIG. 2*

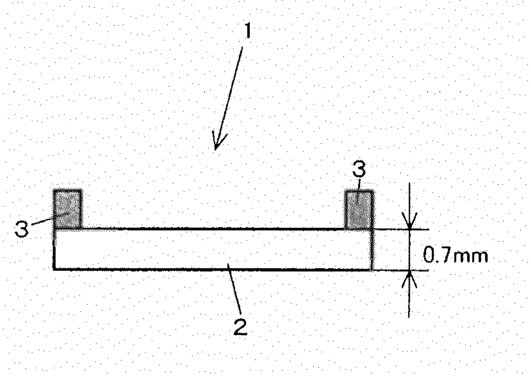


EP 2 537 903 A2

## Description

BACKGROUND OF THE INVENTION

Technical Field

The present invention relates to a double-sided pressure-sensitive adhesive sheet. More specifically, the present invention relates to an optical double-sided pressure-sensitive adhesive sheet used for laminating optical members or used in the manufacture of optical products, and pressure-sensitive adhesive optical member.

Background Art

Recently, in various fields, display devices such as a liquid crystal display (LCD) or an input device which is used by combining with the display device, such as a touch panel, has been widely used. In the manufacture of the display device or the input device, a transparent pressure-sensitive adhesive sheet is used for laminating optical members. For example, the transparent double-sided pressure-sensitive adhesive sheet is used for laminating a touch panel and the like to liquid crystal display device (for example, see Patent Documents 1 to 3).

Among the foregoing optical members, those including a member with a step such as a printing step increase. For example, there is the case where lens members in which frame-shaped printing is applied onto a liquid crystal display device are laminated via a double-sided pressure-sensitive adhesive sheet. In such a case, there is a concern that a local stress is impressed to a product due to a printing step, thereby generating unevenness in optical characteristics (for example, display unevenness, etc.). For that reason, in such an application, the pressure-sensitive adhesive sheet is required to have a performance of laminating and fixing members and at the same time, to have stress relaxation properties. In addition, in the foregoing application of laminating optical members, in particular, the pressure-sensitive adhesive sheet is required to have, in addition to adhesiveness and transparency, excellent reliability such as properties of causing neither foaming nor release (anti-foaming release property) under a high-temperature or high-humidity environment or the like.

In response to such requirements, a pressure-sensitive adhesive sheet having stress relaxation properties and anti-foaming release property is proposed (see Patent Document 4).

Patent Document 1: JP 2003-238915 A
Patent Document 2: JP 2003-342542 A
Patent Document 3: JP 2004-231723 A
Patent Document 4: JP 2010-189545 A

SUMMARY OF THE INVENTION

However, in recent years, requirements for reliability (in particular, anti-foaming release property), in particular reliability to plastics and step absorbability are becoming severe more and more. For example, when laminating rigid bodies such as glasses to each other, it is required to embed a large step of about from 23 to 28 μm.

In consequence, an object of the invention is to provide an optical double-sided pressure-sensitive adhesive sheet which is not only excellent in step absorbability but excellent in anti-foaming release property.

In order to achieve the foregoing object, the present inventors made extensive and intensive investigations. As a result, it has been found that by forming a pressure-sensitive adhesive layer which an optical double-sided pressure-sensitive adhesive sheet has into a pressure-sensitive adhesive layer which contains an acrylic polymer and an acrylic polymer having a specified weight average molecular weight, and has a specified residual stress of a prescribed value or less, an optical double-sided pressure-sensitive adhesive sheet having excellent step absorbability and anti-foaming release property is obtained, leading to accomplishment of the present invention.

That is, the present invention provides an optical double-sided pressure-sensitive adhesive sheet including a pressure-sensitive adhesive layer which contains an acrylic polymer A and an acrylic polymer B having a weight average molecular weight of from 1,000 to 30,000, and has a residual stress after 180 seconds of 3.0 $N/cm^2$ or less, the residual stress after 180 seconds being measured in accordance with a tensile stress relaxation test under the conditions of a temperature of 23 °C and a strain of 300 %.

In the optical double-sided pressure-sensitive adhesive sheet, a content of the acrylic polymer B in the pressure-sensitive adhesive layer is preferably 1 part by weight or more and less than 15 parts by weight based on 100 parts by weight of the acrylic polymer A.

In the optical double-sided pressure-sensitive adhesive sheet, the acrylic polymer A is preferably formed from

a monomer component including an alkoxyalkyl acrylate as an essential monomer component.

In the optical double-sided pressure-sensitive adhesive sheet, the acrylic polymer A is preferably formed from a monomer component including an alkyl (meth)acrylate having a linear or branched alkyl group as an essential monomer component.

In the optical double-sided pressure-sensitive adhesive sheet, the acrylic polymer B is preferably formed from a monomer component including a (meth)acrylic acid ester having a cyclic structure in a molecule thereof and an alkyl (meth)acrylate having a linear or branched alkyl group, as essential monomer components.

In the optical double-sided pressure-sensitive adhesive sheet, the acrylic polymer A is preferably formed by an active energy ray polymerization.

The optical double-sided pressure-sensitive adhesive sheet is preferably a substrateless double-sided pressure-sensitive adhesive sheet consisting of the pressure-sensitive adhesive layer.

The optical double-sided pressure-sensitive adhesive sheet preferably has a total thickness of from 50 to 600 μm.

In the optical double-sided pressure-sensitive adhesive sheet, the acrylic polymer A is preferably formed from a monomer component including a nitrogen-containing monomer.

In addition, the present invention provides a pressure-sensitive adhesive optical member including an optical member and the optical double-sided pressure-sensitive adhesive sheet on a surface of the optical member.

The optical double-sided pressure-sensitive adhesive sheet of the present invention is not only excellent in the anti-foaming release property (anti-foaming reliability) because the pressure-sensitive adhesive layer contains the acrylic polymer B but excellent in the step absorbability (characteristic of being able to embed a step on the surface of an adherend) because the specified residual stress of the pressure-sensitive adhesive layer is a prescribed value or less.

BRIEF DESCRIPTION OF THE DRAWINGS

FIG. 1 is a diagrammatic illustration (plan view) showing a glass plate with printing step which was used for evaluation of step absorbability.

FIG. 2 is a diagrammatic illustration (A-A' line cutting edge view) showing a glass plate with printing step which was used for evaluation of step absorbability.

FIG. 3 is a diagrammatic illustration (plan view) showing an acrylic plate with printing step which was used for evaluation of anti-foaming reliability.

FIG. 4 is a diagrammatic illustration (B-B' line cutting edge view) showing an acrylic plate with printing step which was used for evaluation of anti-foaming reliability.

DETAILED DESCRIPTION OF THE INVENTION

The optical double-sided pressure-sensitive adhesive sheet of the present invention includes at least one pressure-sensitive adhesive layer which contains an acrylic polymer A and an acrylic polymer B having a weight average molecular weight of from 1,000 to 30,000 and has a residual stress after 180 seconds of 3.0 N/cm$^2$ or less, the residual stress after 180 seconds being measured in accordance with a tensile stress relaxation test under the conditions of a temperature of 23 °C and a strain of 300 %. In the present specification, the optical double-sided pressure-sensitive adhesive sheet of the present invention is sometimes referred to simply as "double-sided pressure-sensitive adhesive sheet of the present invention". In addition, the "pressure-sensitive adhesive layer which contains an acrylic polymer A and an acrylic polymer B having a weight average molecular weight of from 1,000 to 30,000 and has a residual stress after 180 seconds of 3.0 N/cm$^2$ or less, the residual stress after 180 seconds being measured in accordance with a tensile stress relaxation test under the conditions of a temperature of 23 °C and a strain of 300 %" is sometimes referred to as "pressure-sensitive adhesive layer of the present invention". Furthermore, the "residual stress after 180 seconds being measured in accordance with a tensile stress relaxation test under the conditions of a temperature of 23 °C and a strain of 300 %" is sometimes referred to simply as "residual stress".

The "pressure-sensitive adhesive sheet" in the double-sided pressure-sensitive adhesive sheet of the present invention includes a tape form, that is, a "pressure-sensitive adhesive tape". Also, the "pressure-sensitive adhesive layer surface" of the double-sided pressure-sensitive adhesive sheet of the present invention is sometimes referred to as a "pressure-sensitive adhesive surface".

[Pressure-sensitive adhesive layer of the present invention]

The pressure-sensitive adhesive layer of the present invention contains at least an acrylic polymer A and an acrylic polymer B. In the pressure-sensitive adhesive layer of the present invention, only one kind of the acrylic polymer

A may be contained or two or more kinds of the acrylic polymer A may be contained. Furthermore, only one kind of the acrylic polymer B may be contained or two or more kinds of the acrylic polymer B may be contained.

The pressure-sensitive adhesive layer of the present invention is formed of a pressure-sensitive adhesive composition (composition for forming pressure-sensitive adhesive). The "pressure-sensitive adhesive composition" also includes the meaning of "composition for forming a pressure-sensitive adhesive".

Though a total amount of the acrylic polymer A and the acrylic polymer B in the pressure-sensitive adhesive layer of the present invention is not particularly limited, it is preferably 90 wt% or more, and more preferably 95 wt% or more relative to the total amount (100 wt%) of the pressure-sensitive adhesive layer of the present invention. That is, the pressure-sensitive adhesive layer of the present invention is an acrylic pressure-sensitive adhesive layer containing the acrylic polymer A and the acrylic polymer B as essential components.

In addition, though a content of the acrylic polymer A in the pressure-sensitive adhesive layer of the present invention is not particularly limited, from the standpoint of pressure-sensitive adhesive characteristic, it is preferably 85 wt% or more, and more preferably 90 wt% or more relative to the total amount (100 wt%) of the pressure-sensitive adhesive layer of the present invention.

(Acrylic polymer A)

The acrylic polymer A is a polymer formed from a monomer component including an acrylic monomer as an essential monomer component. The acrylic polymer A is a polymer which is different from the acrylic polymer B. The term "different" means that the acrylic polymer A and the acrylic polymer B are not completely identical with each other with respect to a constituent monomer species and an amount thereof. In addition, it is preferable that a weight average molecular weight of the acrylic polymer A is larger than a weight average molecular weight of the acrylic polymer B. Incidentally, the acrylic polymer A may be a copolymer formed from a monomer component including an acrylic monomer and a monomer (copolymerizable monomer) other than the acrylic monomer, as monomer components.

Though the acrylic polymer A is not particularly limited, it is preferably an acrylic polymer formed from a monomer component including an alkoxyalkyl acrylate as an essential monomer component, and more preferably an acrylic polymer formed from a monomer component including an alkoxyalkyl acrylate and an alkyl (meth)acrylate having a linear or branched alkyl group as essential monomer components. This is because when the acrylic polymer A is formed from a monomer component including an alkoxyalkyl acrylate as an essential monomer component, the compatibility with the acrylic polymer B is enhanced, and furthermore, the anti-foaming release property of the pressure-sensitive adhesive layer is enhanced. It may be considered that the reason why the anti-foaming release property of the pressure-sensitive adhesive layer is enhanced resides in the matter that when the acrylic polymer is allowed to have a higher molecular weight by crosslinking owing to the effect of the alkoxyl group (alkoxy group), appropriate entanglement of molecular chains occurs, and hence, not only the pressure-sensitive adhesive layer can exhibit a high pressure-sensitive adhesive force even under a high temperature, but the storage elastic modulus of the pressure-sensitive adhesive layer does not decrease even under a high temperature. The "(meth)acryl" means "acryl" and/or "methacryl" (any one or both of "acryl" and "methacryl"), and the same applies to the following.

In addition, the acrylic polymer A may be formed from a monomer component including an alkyl (meth)acrylate having a linear or branched alkyl group as an essential monomer component.

The alkoxylalkyl acrylate is not particularly limited, and examples thereof include 2-methoxyethyl acrylate, 2-ethoxyethyl acrylate, methoxytriethylene glycol acrylate, 3-methoxypropyl acrylate, 3-ethoxypropyl acrylate, 4-methoxybutyl acrylate and 4-ethoxybutyl acrylate. Among these, 2-methoxyethyl acrylate (2MEA) is preferred. The alkoxyalkyl arylate may be used either alone or in combination of two or more thereof.

The alkyl (meth)acrylate having a linear or branched alkyl group is not particularly limited, and examples thereof include alkyl (meth)acrylate having alkyl group (liner or branched alkyl group) having 1 to 20 carbon atoms such as methyl (meth)acrylate, ethyl (meth)acrylate, propyl (meth)acrylate, isopropyl (meth)acrylate, butyl (meth)acrylate (n-butyl (meth)acrylate, isobutyl (meth)acrylate, s-butyl (meth)acrylate, t-butyl (meth)acrylate), pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicosyl (meth)acrylate. Among these, alkyl (meth)acrylate having alkyl group (liner or branched alkyl group) having 4 to 12 carbon atoms is preferred. The alkyl (meth)acrylate may be used either alone or in combination of two or more thereof.

In particular, from the standpoints of step absorbability and low-temperature drop impact resistance, the alkyl (meth)acrylate having a linear or branched alkyl group is preferably one having a glass transition temperature of -55 °C or less when formed as a homopolymer thereof. Specifically, 2-ethylhexyl acrylate (2EHA) (Tg: -70 °C), butyl acrylate (BA) (Tg: -57°C), isooctyl acrylate (iOA) (Tg: -58 °C), and the like are preferable. The term "Tg" means a glass transition temperature when formed as a homopolymer thereof.

With respect to Tg of a homopolymer of a monomer, according to the foregoing definition, Tg of a homopolymer of 2-ethylhexyl acrylate (2EHA) is -70 °C; Tg of a homopolymer of butyl acrylate (BA) is -57 °C; and Tg of a homopolymer of isooctyl acrylate (iOA) is -58 °C.

With respect to Tg of homopolymers of alkyl (meth)acrylates having a linear or branched alkyl group other than 2-ethylhexyl acrylate (2EHA), butyl acrylate (BA), and isooctyl acrylate (iOA), numerical values described in "Polymer Handbook" (Third Edition, John Wiley & Sons, Inc., 1989) can be adopted.

In addition, with respect to Tg of homopolymers of monomers other than 2-ethylhexyl acrylate (2EHA), butyl acrylate (BA), and isooctyl acrylate (iOA) and not described in the above-described document, for example, values obtained according to the following Measuring Method 1 (see JP 2007-51271 A) can be adopted.

(Measuring Method 1)

100 parts by weight of a monomer, 0.2 part by weight of azobisisobutyronitrile, and 200 parts by weight of ethyl acetate as a polymerization solvent, are put into a reactor provided with a thermometer, an agitator, a nitrogen introducing tube and a reflux cooling tube, followed by stirring for 1 hour while nitrogen gas is introduced thereto. After oxygen in the polymerization system is removed thereby, the system is heated to 63°C, followed by reacting for 10 hours. Subsequently, the system is cooled to room temperature, thereby obtaining a homopolymer solution having a solid matter concentration of 33 wt%. Thereafter, the homopolymer solution is cast-coated on a release liner, followed by drying to prepare a test sample (sheet-shaped homopolymer) having a thickness of about 2 mm. The test sample is pierced in a disk shape having a diameter of 7.9 mm, and the pieced test samples is inserted to a parallel plate and then viscoelasticity thereof is measured by a shear mode at a temperature-rising rate of 5°C/min in the temperature range of -70°C to 150°C while applying shear distortion of a frequency of 1 Hz by using a viscoelasticity tester (ARES, manufactured by Reomatrix Corporation) and a peaktop temperature of tan$\delta$ is set as Tg of the homopolymer.

In the total amount (100 wt%) of the monomer components forming the acrylic polymer A, a content of the foregoing acrylic monomer, in particular in the case where the acrylic polymer A is formed from a monomer component including an alkoxyalkyl acrylate and an alkyl (meth)acrylate having a linear or branched alkyl group as essential monomer components, a total amount of a content of the alkoxyalkyl acrylate and a content of the alkyl (meth)acrylate having a linear or branched alkyl group is not particularly limited. However, from the standpoint of adhesiveness of the pressure-sensitive adhesive layer of the present invention, the content of the acrylic monomers is preferably 80 wt% or more (for example, from 80 to 100 wt%), more preferably 85 wt% or more (for example, from 85 to 95 wt%), and still more preferably 90 wt% or more (for example, from 90 to 95 wt%).

In particular, in the case where the acrylic polymer A is an acrylic polymer formed from a monomer component including an alkoxyalkyl acrylate and an alkyl (meth)acrylate having a linear or branched alkyl group as essential monomer components, a proportion of the alkoxyalkyl acrylate to the alkyl (meth)acrylate having a linear or branched alkyl group in the total amount (100 wt%) of the acrylic monomers is not particularly limited. However, from the standpoint of compatibility of the acrylic polymer A with the acrylic polymer B, the standpoint of adhesiveness of the pressure-sensitive adhesive layer, and the standpoint of regulating the storage elastic modulus (23 °C) of the pressure-sensitive adhesive layer to avoid the occurrence of an increase of the residual stress of the pressure-sensitive adhesive layer, the proportion is preferably from 30:70 to 5:95, more preferably from 30:70 to 10:90, and still more preferably from 25:75 to 10:90 in terms of a ratio (on the weight basis) of "alkoxyalkyl acrylate : alkyl (meth)acrylate having a linear or branched alkyl group".

In addition, in the case where the acrylic polymer A is a copolymer of an acrylic monomer and a copolymerizable monomer, though the copolymerizable monomer is not particularly limited, preferred examples thereof include a nitrogen atom-containing monomer and a polyfunctional monomer. The copolymerizable monomer may be used either alone or in combination of two or more kinds thereof.

From the standpoint of enhancing the anti-foaming release property of the pressure-sensitive adhesive layer, in the acrylic polymer A, it is preferable to use a nitrogen atom-containing monomer as the copolymerizable monomer component. The nitrogen atom-containing monomer as referred to herein means a monomer having at least one nitrogen atom in a molecule thereof. Preferable examples of the nitrogen-containing monomer include a heterocyclic ring-containing vinyl monomer such as N-vinyl-2-pyrrolidone, (meth)acryloyl morpholine, N-vinylpyridine, N-vinylpiperidone, N-vinylpyrimidine, N-vinylpiperazine, N-vinylpyrrole, N-vinylimidazole, and N-vinyloxazole; and an amide group-containing monomer such as (meth)acrylamide, N,N-dimethyl (meth)acrylamide, N-methylol (meth)acrylamide, N-methoxymethyl (meth)acrylamide, N-butoxymethyl (meth)acrylamide, and N-hydroxyethyl (meth)acrylamide. Among these, N-vinyl-2-pyrrolidone (NVP), N-hydroxyethyl acrylamide (HEAA), N,N-dimethyl (meth)acrylamide(DMAA) and the like are preferable, The nitrogen-containing monomer may be used either alone or in combination of two or more thereof.

Though a content of the nitrogen atom-containing monomer in the total amount (100 wt%) of the monomer components constituting the acrylic polymer A is not particularly limited, it is preferably from 1 to 30 wt%, more preferably from 3 to 25 wt%, and still more preferably from 5 to 20 wt%. When the content of the nitrogen atom-containing monomer is 1 wt% or more, there is a tendency that the anti-foaming release property of the pressure-sensitive adhesive layer is

enhanced. In addition, when the content of the nitrogen atom-containing monomer is 30 wt% or less, there is a tendency that the pressure-sensitive adhesive layer has moderate flexibility, and a pressure-sensitive adhesive force or step absorbability is enhanced.

From the standpoint of regulating a gel fraction of the pressure-sensitive adhesive layer to obtain a prescribed residual stress, in the acrylic polymer A, it is preferable to use a polyfunctional monomer as the copolymerizable monomer. As the polyfunctional monomer, examples thereof include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxyacrylate, polyester acrylate and urethane acrylate. Among these, dipentaerythritol hexaacrylate (DPHA) is preferred. The polyfunctional monomer may be used alone or in combination of two or more thereof.

Though a content of the polyfunctional monomer in the total amount (100 wt%) of the monomer components constituting the acrylic polymer A is not particularly limited, it is preferably from 0.001 to 0.5 parts by weight, and more preferably from 0.002 to 0.15 parts by weight.

As copolymerizable monomer (other copolymerizable monomer) other than the above nitrogen-containing monomer and polyfunctional monomer, examples thereof include a carboxyl group-containing monomer such as (meth) acrylic acid, itaconic acid, maleic acid, fumaric acid, crotonic acid and isocrotonic acid, or acid anhydride thereof (maleic anhydride and the like); a hydroxyl group-containing monomer such as hydroxyalkyl (meth)acrylate (e.g., 2-hydroxyethyl (meth)acrylate, 3-hydroxypropyl (meth)acrylate, 4-hydroxybutyl (meth)acrylate, 6-hydroxyhexyl (meth)acrylate and the like), vinyl alcohol, and allyl alcohol; glycidyl group-containing monomer such as glycidyl (meth)acrylate and methyl glycidyl (meth)acrylate; a sulfonic acid group-containing monomer such as sodium vinylsulfonate; and a phosphoric acid group-containing monomer such as 2-hydroxyethylacryloyl phosphate.

Furthermore, examples of the copolymerizable monomer (other copolymerizable monomer) include (meth) acrylic acid esters other than the above alkoxyalkyl acrylate, alkyl (meth)acrylate having a linear or branched alkyl group, nitrogen atom-containing monomer and polyfunctional monomer, e.g. (meth)acrylic acid esters having an alicyclic hydrocarbon group, such as cyclopentyl (meth)acrylate, cyclohexyl (meth)acrylate, and isobornyl (meth)acrylate. (meth) acrylic acid esters having an aromatic hydrocarbon group, such as phenyl (meth)acrylate, an alkoxyalkyl methacrylate;; vinyl esters such as vinyl acetate and vinyl propionate; aromatic vinyl compounds such as styrene and vinyltoluene; olefins or dienes such as ethylene, butadiene, isoprene, and isobutylene; vinyl ethers such as a vinyl alkyl ether; and vinyl chloride.

In particular, the acrylic polymer A is preferably an acrylic polymer formed from a monomer component including an alkoxyalkyl acrylate, an alkyl (meth)acrylate having a linear or branched alkyl group and having a glass transition temperature of -55 °C or less when formed as a homopolymer thereof, and N-vinyl-2-pyrrolidone, as essential monomer components.

The acrylic polymer A is formed by polymerizing the foregoing monomer components such as the foregoing acrylic monomers or copolymerizable monomers according to a known or general polymerization method. Examples of the polymerization method of the acrylic polymer A include a solution polymerization method, an emulsion polymerization method, a block polymerization method, and a polymerization method upon irradiation with an active energy ray (active energy ray polymerization method). Above all, from the standpoints of optical characteristics and reliability to plastics, a solution polymerization method and an active energy ray polymerization method are preferable, and an active energy ray polymerization method is more preferable. That is, the acrylic polymer A is more preferably an acrylic polymer formed by means of active energy ray polymerization.

Examples of the active energy ray to be irradiated during active energy ray polymerization (photopolymerization) include ionizing radiations such as an $\alpha$-ray, a $\beta$-ray, a $\gamma$-ray, a neutron ray, and an electron beam; and an ultraviolet ray, and an ultraviolet ray is especially suitable. In addition, the irradiation energy, irradiation time, irradiation method, and the like of the active energy ray are not particularly limited, and they are satisfied so far as the reaction of the monomer components can be induced upon activation of a photopolymerization initiator.

In the solution polymerization, various general solvents can be used. Examples of such a solvent include organic solvents, such as esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. These solvents may be used either alone or in combination of two or more kinds thereof.

When the acrylic polymer A is formed, a polymerization initiator such as a thermal polymerization initiator and a photopolymerization initiator (photo initiator) may be used depending upon the kind of the polymerization reaction. The polymerization initiator may be used either alone or in combination of two or more kinds thereof.

Examples of the photopolymerization initiator may include, but not particularly limited to, for example, a benzoin ether photopolymerization initiator, an acetophenon photopolymerization initiator, an $\alpha$-ketol photopolymerization initiator, an aromatic sulfonyl chloride photopolymerization initiator, a photoactive oxime photopolymerization initiator, a

benzoin photopolymerization initiator, a benzyl photopolymerization initiator, a benzophenon photopolymerization initiator, a ketal photopolymerization initiator and a thioxantone photopolymerization initiator. As the benzoin ether photopolymerization initiator, examples thereof include benzoin methyl ether, benzoin ethyl ether, benzoin propyl ether, benzoin isopropyl ether, benzoin isobutyl ether, 2,2-dimethoxy-1,2-diphenylethane-1-on and anisole methyl ether. As the acetophenon photopolymerization initiator, examples thereof include 2,2-diethoxyacetophenon, 2,2-dimethoxy-2-phenylacetophenon, 1-hydroxycyclohexylphenylketone, 4-phenoxydichloroacetophenon and 4-(t-butyl)dichloroacetophenon. As the $\alpha$-ketol photopolymerization initiator, examples thereof include 2-methyl-2-hydroxypropiophenon and 1-[4-(2-hydroxyethyl)phenyl]-2-methylpropane-1-on. As the aromatic sulfonyl chloride photopolymerization initiator, examples thereof include 2-naphthalenesulfonyl chloride. As the photoactive oxime photopolymerization initiator, examples thereof include 1-phenyl-1,1-propanedion-2-(o-ethoxycarbonyl)-oxime. As the benzoine photopolymerization initiator, examples thereof include benzoin. As the benzyl photopolymerization initiator, examples thereof include benzyl. As the benzophenon photopolymerization initiator, examples thereof include benzophenon, benzoylbenzoate, 3,3'-dimethyl-4-methoxybenzophenon, polyvinylbenzophenon and $\alpha$-hydroxycyclohexyl phenyl ketone. As the ketal photopolymerization initiator, examples thereof include benzyl dimethyl ketal. As the thioxantone photopolymerization initiator, examples thereof include thioxantone, 2-chlorothioxantone, 2-methylthioxantone, 2, 4-dimethylthioxantone, isopropylthioxantone, 2, 4-diisopropylthioxantone and dodecylthioxantone.

Though a use amount of the photopolymerization initiator is not particularly limited, for example, it is preferably from 0.01 to 0.2 parts by weight, and more preferably from 0.05 to 0.15 parts by weight based on 100 parts by weight of the total amount of the monomer components forming the acrylic polymer A.

In addition, though the thermal polymerization initiator is not particularly limited, examples thereof include azo-based polymerization initiators, peroxide-based polymerization initiators, and redox-based polymerization initiators. Examples of the azo-based polymerization initiator include 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azabis(N,N'-dimethyleneisobutylamidine) dihydrochloride. Examples of the peroxide-based polymerization initiator include dibenzoyl peroxide and tert-butyl permaleate. Though a use amount of the thermal polymerization initiator is not particularly limited, it is preferable to select the use amount within the range which has hitherto been used as the thermal polymerization initiator.

Though a glass transition temperature (Tg) of the acrylic polymer A is not particularly limited, it is preferably from -80 to 20 °C, more preferably from -60 to 0 °C, and still more preferably from -50 to -10 °C. When the glass transition temperature of the acrylic polymer A is 20 °C or less, there is a tendency that the pressure-sensitive adhesive layer has moderate flexibility, and a pressure-sensitive adhesive force or step absorbability is enhanced.

The glass transition temperature (Tg) of the acrylic polymer is a glass transition temperature (theoretical value) represented by the following equation.

$$1/Tg = W_1/Tg_1 + W_2/Tg_2 + \ldots + W_n/Tg_n$$

In the above equation, Tg represents a glass transition temperature (unit: K) of the acrylic polymer, $Tg_i$ represents a glass transition temperature (unit: K) when a monomer i forms a homopolymer, and $W_i$ represents a weight fraction of the monomer i (i = 1, 2, ..., n) in the entire monomer components. The equation is used when the acrylic polymer is configured by n kinds of monomer components such as monomer 1, monomer 2, ..., monomer n.

With respect to Tg of a homopolymer of a monomer, Tg of a homopolymer of 2-ethylhexyl acrylate (2EHA) is -70 °C; Tg of a homopolymer of butyl acrylate (BA) is -57 °C; and Tg of a homopolymer of isooctyl acrylate (iOA) is -58 °C.

With respect to Tg of homopolymers of monomers other than 2-ethylhexyl acrylate (2EHA), butyl acrylate (BA), and isooctyl acrylate (iOA), numerical values described in "Polymer Handbook" (Third Edition, John Wiley & Sons, Inc., 1989) can be adopted.

In addition, with respect to Tg of homopolymers of monomers other than 2-ethylhexyl acrylate (2EHA), butyl acrylate (BA), and isooctyl acrylate (iOA) and not described in the above-described document, for example, values obtained according to the foregoing Measuring Method 1 (see JP 2007-51271 A) can be adopted.

A weight average molecular weight of a sol content of the acrylic polymer A is 70,000 or more. The sol matter shows a soluble matter in extraction with chloroform in the acrylic polymer A. For example, the weight average molecular weight of the sol matter of the acrylic polymer A can be measured by means of GPC determination (molecular weight determination by GPC method).

(Acrylic polymer B)

The acrylic polymer B which is contained in the pressure-sensitive adhesive layer of the present invention is an oligomer formed from a monomer component including an acrylic monomer as an essential monomer component.

Though the acrylic polymer B is not particularly limited, it is preferably an acrylic polymer formed from a monomer component including a (meth)acrylic acid ester having a cyclic structure in a molecule thereof and an alkyl (meth)acrylate having a linear or branched alkyl group as essential monomer components. In the present specification, the (meth)acrylic acid ester having a cyclic structure in a molecule thereof is sometimes referred to as "ring-containing (meth)acrylic acid ester".

The cyclic structure (ring) of the ring-containing (meth)acrylic acid ester may be any one of an aromatic ring and a non-aromatic ring, and is not particularly limited. As the aromatic ring, examples thereof include an aromatic carbon ring, e.g. a monocyclic carbon ring such as a benzene ring, and a condensed carbon ring such as a naphthalene ring; various aromatic heterocyclic rings; and the like. As the non-aromatic ring, examples thereof include a non-aromatic aliphatic ring (non-aromatic alicyclic ring), a non-aromatic crosslinking ring, a nonaromatic heterocyclic ring and the like. As the non-aromatic aliphatic ring, examples thereof include a cycloalkane ring such as a cyclopentane ring, a cyclohexane ring, a cycloheptane ring and a cyclooctane ring; a cycloalkene ring such as a cyclohexene ring. As the non-aromatic crosslinking ring, examples thereof include a bicyclic hydrocarbon ring such as pinane, pinene, bornane, norbornane and norbornene; a tri- or multi-cyclic aliphatic hydrocarbon ring (crosslinking hydrocarbon ring) such as adamantine. As the nonaromatic heterocyclic ring, examples thereof include an epoxy ring, an oxolan ring, an oxetane ring and the like.

As the tri- or multi-cyclic aliphatic hydrocarbon ring (tri- or multi-cyclic crosslinking hydrocarbon ring), examples thereof include a dicyclopentanyl group represented by the following formula (1a), a dicyclopentenyl group represented by the following formula (1b), an adamantyl group represented by the following formula (1c), a tricyclopentanyl group represented by the following formula (1d), a tricyclopentenyl group represented by the following formula (1e), and the like.

[Chem. 1]

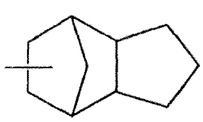

(1a)

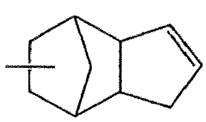

(1b)

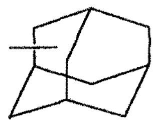

(1c)

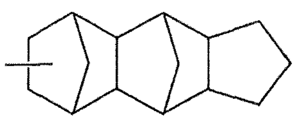

(1d)

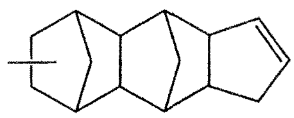

(1e)

That is, as the ring-containing (meth)acrylic acid ester, examples thereof include cycloalkyl (meth)acrylate such as cyclopentyl (meth)acrylate, cyclohexyl (meth)acrylate, cycloheptyl (meth)acrylate and cyclooctyl (meth)acrylate; (meth)acrylic acid ester having a bicyclic aliphatic hydrocarbon ring such as isobornyl (meth)acrylate; (meth)acrylic acid ester having a tri- or multi-cyclic aliphatic hydrocarbon ring such as dicyclopentanyl (meth)acrylate, dicyclopentanyloxyethyl (meth)acrylate, tricyclopentanyl (meth)acrylate, 1-adamantyl (meth)acrylate, 2-methyl-2-adamantyl (meth)acrylate and 2-ethyl-2-adamantyl (meth)acrylate; (meth)acrylic acid ester having an aromatic ring, e.g. arylester (meth)acrylate such as phenyl (meth)acrylate, aryloxyalkylester (meth)acrylate such as phenoxyethyl (meth)acrylate, arylalkylester (meth)acrylate such as benzyl (meth)acrylate. Among them, as the ring-containing (meth)acrylic acid ester, non-aromatic ring-containing (meth)acrylic acid ester is preferable, cyclohexyl acrylate (CHA), cyclohexyl methacrylate (CHMA), dicyclopentanyl acrylate (DCPA) and dicyclopetanyl methacrylate (DCPMA) are more preferable, and dicyclopentanyl acrylate (DCPA) and dicyclopetanyl methacrylate (DCPMA) are even more preferable. The ring-containing (meth)acrylic acid ester may be used either alone or in combination of two or more thereof.

Among the non-aromatic ring-containing (meth)acrylic acid esters, the (meth)acrylic acid ester having a tri- or multi-cyclic aliphatic hydrocarbon ring (particularly, tri- or multi-cyclic crosslinking hydrocarbon ring) is preferably used from the viewpoint of hardly causing polymerization inhibition. In addition, the (meth)acrylic acid ester having the dicyclopetanyl group represented by the formula (la), the adamantyl group represented by the formula (1c), and the tricyclopentanyl group represented by the formula (1d), which do not have an unsaturated bond, is preferably used from the

viewpoint that the anti-foaming release property can be more increased, and the adhesive property to a low-polarity adherend such as polyethylene or polypropylene can be largely improved.

Though a content of the ring-containing (meth)acrylic acid ester in the total amount (100 wt%) of the monomer components forming the acrylic polymer B is not particularly limited, it is preferably from 10 to 90 wt%, more preferably from 20 to 80 wt%, and still more preferably from 35 to 80 wt%. When the content of the ring-containing (meth)acrylic acid ester is 10 wt% or more, there is a tendency that Tg of the acrylic polymer becomes large, and the anti-foaming release property is enhanced. On the other hand, when the content of the ring-containing (meth)acrylic acid ester is 90 wt% or less, there is a tendency that the pressure-sensitive adhesive layer has moderate flexibility, and a pressure-sensitive adhesive force or step absorbability is enhanced.

As the alkyl (meth)acrylate having the linear or branched alkyl group, examples thereof include alkyl (meth) acrylate having an alkyl group (linear or branched alkyl group) having 1 to 20 carbon atoms, such as methyl (meth) acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl(meth) acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylat and eicosyl (meth)acrylate. Among the alkyl (meth) acrylates, methyl methacrylate (MMA) is preferable from the viewpoint of improving compatibility with the acrylic polymer A. The alkyl (meth)acrylate having a liner or branched alkyl group may be used either alone or in combination of two or more thereof.

Though a content of the alkyl (meth)acrylate having a linear or branched alkyl group in the total amount (100 wt%) of the monomer components forming the acrylic polymer B is not particularly limited, from the standpoint of anti-foaming release property, it is preferably from 10 to 90 wt%, more preferably from 20 to 80 wt%, and still more preferably from 20 to 60 wt%. When this content is 10 wt% or more, in particular, there is a tendency that a pressure-sensitive adhesive force to an adherend made of an acrylic resin or polycarbonate is enhanced.

In addition, the acrylic polymer B may also be a copolymer formed from monomer components including the foregoing acrylic monomer; and a monomer which is other than the foregoing acrylic monomer and is a monomer (copolymerizable monomer) capable of being copolymerized with the foregoing acrylic monomer. As the copolymerizable monomer, examples thereof include alkoxyalkyl (meth)acrylate, a carboxyl group-containing monomer, an amide group-containing monomer, an amino group-containing monomer, a cyano group-containing monomer, a sulfonate group-containing monomer, a phosphate group-containing monomer, an isocyanate group-containing monomer, and an imide group-containing monomer. More specifically, as the alkoxyalkyl (meth)acrylate, examples thereof include 2-methoxyethyl (meth)acrylate, 2-ethoxyethyl (meth)acrylate, methoxytriethyleneglycol (meth)acrylate, 3-methoxypropyl (meth)acrylate, 3-ethoxypropyl (meth)acrylate, 4-methoxybutyl (meth)acrylate, 4-ethoxybutyl (meth)acrylate and the like. As the carboxyl group-containing monomer, examples thereof include (meth)acrylic acid, itaconic acid, maleic acid, fumaric acid, crotonic acid, isocrotonic acid and the like. An acid anhydride group-containing monomer such as maleic anhydride is also included in the carboxyl group-containing monomer. As the amide group-containing monomer, examples thereof include (meth)acrylamide, N,N-dimethyl (meth)acrylamide, N-methylol (meth)acrylamide, N-methoxymethyl (meth)acrylamide, N-butoxymethyl (meth)acrylamide, N-hydroxyethyl (meth)acrylamide and the like. As the amino group-containing monomer, examples thereof include aminoethyl (meth)acrylate, dimethylaminoethyl (meth)acrylate, t-butylaminoethyl (meth)acrylate and the like. As the cyano group-containing monomer, examples thereof include acrylonitrile, methacrylonitrile and the like. As the sulfonate group-containing monomer, examples thereof include sodium vinyl sulfonate and the like. As the phosphate group-containing monomer, examples thereof include 2-hydroxyethylacryloylphophate and the like. As the isocyanate group-containing monomer, examples thereof include 2-methacryloyloxyethyl isocyanate and the like. As the imide group-containing monomer, examples thereof include cyclohexyl maleimide, isopropyl maleimide and the like. The copolymerizable monomer may be used either alone or in combination of two or more thereof.

Though a content of the copolymerizable monomer in the total amount (100 wt%) of the monomer components forming the acrylic polymer B is not particularly limited, it is preferably 49.9 wt% or less (for example, from 0 to 49.9 wt%), and more preferably 30 wt% or less.

The acrylic polymer B is preferably formed from a component including the ring-containing (meth)acrylic acid ester and the alkyle (meth)acrylate as essential monomer components, and as a particularly preferable detailed aspect, examples thereof include an acrylic polymer formed from a component including [1] one or more monomers selected from the group consisting of dicyclopentanyl acrylate, dicyclopentanyl methacrylate, cyclohexyl acrylate, and cyclohexyl methacrylate, and [2] methyl methacrylate, as essential monomer components. In the acrylic polymer B of the particularly preferable detailed aspect, it is preferred that the content of [1] dicyclopentanyl acrylate, dicyclopentanyl methacrylate, cyclohexyl acrylate and cyclohexyl methacrylate (total amount thereof in the case of including two or more kinds) is 30 wt% to 70 wt%, and the content of [2] methyl methacrylate is 30 wt% to 70 wt%, based on the total amount (100 wt%) of monomer components forming the acrylic polymer B. However, the acrylic polymer B is not limited to the above

detailed aspect.

The acrylic polymer B can be prepared by polymerizing the monomer components using a known and general polymerization method. As the polymerization method of the acrylic polymer B, examples thereof include a solution polymerization method, an emulsion polymerization method, a bulk polymerization method, a polymerization method using an active energy-ray irradiation (active energy-ray polymerization method), and the like. Among them, from the viewpoint of easy handling even in the case of oligomer having a high Tg, the bulk polymerization method and the solution polymerization method are preferable, and the solution polymerization method is more preferable.

In the polymerization of the acrylic polymer B, various kinds of general solvents may be used. As the solvents, examples thereof include organic solvents, such as esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methylethylketone and methylisobutylketone. The solvents may be used either alone or in combination of two or more thereof.

In the polymerization of the acrylic polymer B, a known and general polymerization initiator can be used. In detail, as the polymerization initiator, examples thereof include an azo-based initiator such as 2,2'-azobisisobutyronitrile (AIBN), 2,2'-azobis-2-methylbutyronitrile (AMBN), dimethyl-2,2'-azobis(2-methylpropionate), 4,4'-azobis-4-cyanovalerate, 2,2'-azobis(4-methoxy-2,4-dimethylvaleronitrile), 2,2'-azobis(2,4-dimethylvaleronitrile), l,1'-azobis(cyclohexane-1-carbonitrile) and 2,2'-azobis(2,4,4'-trimethylpentane); a peroxide-based initiator such as benzoylperoxide, t-butylhydroperoxide, di-t-butylperoxide, t-butylperoxybenzoate, dicumylperoxide, 1,1-bis(t-butylperoxy)-3,3,5-trimethylcyclohexane and 1,1-bis(t-butylperoxy)cyclododecane. In the case of the solution polymerization, it is preferred that an oil-soluble polymerization initiator is used. The polymerization initiator may be used either alone or in combination of two or more thereof. The used amount of the polymerization initiator may be a typical used amount, and for example, may be properly selected in a range of about 0.1 parts by weight to 15 parts by weight based on the total amount (100 parts by weight) of monomer components forming the acrylic polymer B.

In the polymerization of the acrylic polymer B, in order to control the molecular weight (in detail, in order to control the weight average molecular weight to 1,000 to 30,000), a chain-transfer agent may be used. As the chain-transfer agent, examples thereof include 2-mercaptoethanol, α-thioglycerol, 2,3-dimercapto-1-propanol, octyl mercaptane, t-nonyl mercaptane, dodecyl mercaptane (lauryl mercaptane), t-dodecyl mercaptane, glycidyl mercaptane, thioglycolic acid, methyl thioglycolate, ethyl thioglycolate, propyl thioglycolate, butyl thioglycolate, t-butyl thioglycolate, 2-ethylhexyl thioglycolate, octyl thioglycolate, isoctyl thioglycolate, decyl thioglycolate, dodecyl thioglycolate, thioglycolic ester of ethyleneglycol, thioglycolic ester of neopentylglycol, thioglycolic ester of pentaerythritol, α-methylstyrene dimmer, and the like. The chain-transfer agents may be used either alone or in combination of two or more thereof. Among them, thioglycolic acid and α-thioglycerol are preferable.

The content (used amount) of the chain-transfer agent is not particularly limited, but is preferably 0.1 parts by weight to 20 parts by weight, more preferably 0.2 parts by weight to 15 parts by weight, and even more preferably 0.3 parts by weight to 10 parts by weight, based on the total amount (100 parts by weight) of monomer components forming the acrylic polymer B. By setting the content (used amount) of the chain-transfer agent to the above range, an acrylic polymer of which the weight average molecular weight is controlled to 1,000 to 30,000 can be easily obtained.

The weight average molecular weight (Mw) of the acrylic polymer B is 1,000 to 30,000, preferably 1,000 to 20,000, more preferably 1,500 to 10,000, and even more preferably 2,000 to 4,000. By setting the weight average molecular weight of the acrylic polymer B to 1,000 or more, the pressure-sensitive adhesive force or a maintaining property is improved, and the anti-foaming release property is improved. On the other hand, by setting the weight average molecular weight of the acrylic polymer B to 30,000 or less, the pressure-sensitive adhesive force is easily increased and the anti-foaming release property is improved.

The weight average molecular weight of the acrylic polymer B can be measured by a gel permeation chromatography (GPC) method. In more detail, the weight average molecular weight of the acrylic polymer can be measured by using a GPC measuring device, a trade name of "HLC-8120 GPC" (manufactured by Tosoh Corporation) under the following measuring condition, and then, calculating with a standard polystyrene conversion value.

(Conditions for measuring molecular weight)

Sample concentration: About 2.0 g/L (tetrahydrofuran solution)
Sample dosage: 20 μL
Column: trade name "TSK gel, Super AWM-H+super AW 4000+super AW 2500" (manufactured by Tosoh Corporation)
Column size: each 6.0 mm I.D.×150 mm
Eluent: tetrahydrofuran (THF)

Flow rate: 0.4 mL/min
Detector: Refractive Index (RI)
Column temperature (measuring temperature): 40°C

The glass transition temperature (Tg) of the acrylic polymer B is not particularly limited, but is preferably 20°C to 300°C, more preferably 30°C to 300°C, and even more preferably 40°C to 300°C. When the glass transition temperature of the acrylic polymer B is 20°C or more, the anti-foaming release property tends to be improved. On the other hand, when the glass transition temperature of the acrylic polymer B is 300°C or less, the pressure-sensitive adhesive layer tends to have proper flexibility, and the pressure-sensitive adhesive force or step absorbability tends to be improved.
The glass transition temperature (Tg) of the acrylic polymer B is a glass transition temperature (theoretical value) represented by the following equation.

$$1/Tg=W_1/Tg_1+W_2/Tg_2+\ldots+W_n/Tg_n$$

In the above equation, Tg represents a glass transition temperature (unit: K) of the acrylic polymer B, Tgi represents a glass transition temperature (unit: K) when a monomer i forms a homopolymer, and Wi represents a weight fraction of the monomer i in the entire monomer components (i=1, 2, ... n). The equation is used when the acrylic polymer B is configured by n kinds of monomer components such as monomer 1, monomer 2, ..., monomer n.
With respect to Tg of homopolymers of monomers, values of monomers shown in the following Table 1 can be adopted.
With respect to Tg of homopolymers of monomers other than the monomers shown in the following Table 1, numerical values described in "Polymer Handbook" (Third Edition. John Wiley & Sons, Inc., 1989) can be adopted.
In addition, with respect to Tg of homopolymers other than the monomers shown in The following Table 1 and not described in the above-described document, for example, values obtained according to the foregoing Measuring Method 1 (see JP 2007-51271 A) can be adopted.
Table 1

| Substance name | Glass transition temperature (Tg) when formed as a homopolymer [°C] |
|---|---|
| Methyl methacrylate (MMA) | 105 |
| Dicyclopentanyl methacrylate (DCPMA) | 175 |
| Dicyclopentanyl acrylate (DCPA) | 120 |
| Isobornyl methacrylate (IBXMA) | 173 |
| Isobornyl acrylate (IBXA) | 97 |
| Cyclohexyl methacrylate (CHMA) | 66 |
| 1-Adamantyl methacrylate (ADMA) | 250 |
| 1-Adamantyl acrylate (ADA) | 153 |

A content of the acrylic polymer B in the pressure-sensitive adhesive layer of the present invention is not particularly limited. However, from the standpoint of compatibility with the acrylic polymer A, the standpoint of anti-foaming release property of the pressure-sensitive adhesive layer, and the standpoint of low-temperature drop impact resistance, the content of the acrylic polymer B is preferably 1 part by weight or more and less than 15 parts by weight, more preferably 1 part by weight or more and less than 8 parts by weight, and still more preferably 1 part by weight or more and less than 5.5 parts by weight based on 100 parts by weight of the acrylic polymer A. The amount of the acrylic polymer A in the pressure-sensitive adhesive layer is equal to the total amount of the monomer components forming the acrylic polymer A.
In particular, it is preferable that the pressure-sensitive adhesive layer of the present invention which the double-sided pressure-sensitive adhesive sheet of the present invention has contains the acrylic polymer A formed from a monomer component including an alkoxyalkyl acylate and an alkyl (meth)acrylate having a linear or branched alkyl group as essential monomer components, with the content of the total amount of the alkoxyalkyl acylate and the alkyl (meth) acrylate having a linear or branched alkyl group in the total amount (100 wt%) of the constituent monomer components being 80 wt% or more; and the acrylic polymer B formed from a monomer component including a ring-containing (meth)acrylic acid ester as an essential monomer component, with the content of the ring-containing (meth)acrylic acid ester in the total amount (100 wt%) of the constituent monomer components being 10 wt% or more.

It is preferable that the pressure-sensitive adhesive layer of the present invention contains the acrylic polymer A and the acrylic polymer B, in which the acrylic polymer A and the acrylic polymer B are ones prepared by polymerization in a separate batch, respectively. In particular, it is preferable that the pressure-sensitive adhesive layer of the present invention contains the acrylic polymer A formed by means of active energy ray polymerization and the acrylic polymer B formed by means of solution polymerization, in which the acrylic polymer A and the acrylic polymer B are ones prepared by polymerization in a separate batch, respectively.

The pressure-sensitive adhesive layer of the present invention is formed from a pressure-sensitive adhesive composition. Though the pressure-sensitive adhesive composition is not particularly limited, it is preferably a pressure-sensitive adhesive composition for forming the pressure-sensitive adhesive layer of the present invention which contains the acrylic polymer B as an essential component. This is because the reliability, in particular the adhesive reliability to plastics is to be enhanced.

Namely, in the pressure-sensitive adhesive composition, it is preferable that the acrylic polymer B is one prepared by polymerization separately from the acrylic polymer A. That is, the pressure-sensitive adhesive layer of the present invention may be formed from a pressure-sensitive adhesive composition containing at least the acrylic polymer A and the acrylic polymer B, or may be formed from a pressure-sensitive adhesive composition containing at least a mixture of monomer components forming the acrylic polymer A (this mixture will be sometimes referred to as "monomer mixture") or partially polymerized product thereof (prepolymer) and the acrylic polymer B.

Preferred examples of the pressure-sensitive adhesive composition include a pressure-sensitive adhesive composition containing the acrylic polymer A and the acrylic polymer B as essential components; and a pressure-sensitive adhesive composition containing a mixture of monomer components forming the acrylic polymer A (monomer mixture) or partially polymerized product thereof, and the acrylic polymer B, as essential components. Examples of the former include a so-called solvent type pressure-sensitive adhesive composition. In addition, examples of the latter include a so-called active energy ray-curable pressure-sensitive adhesive composition. In addition, the "partially polymerized product" as referred to herein means a composition obtained by partially polymerizing one or two or more components of the constituent components of the monomer mixture.

In particular, from the standpoint of productivity, the standpoint of environment, and the standpoint of easiness of obtaining a thick pressure-sensitive adhesive layer, the pressure-sensitive adhesive composition is preferably an active energy ray-curable pressure-sensitive adhesive composition containing a mixture of monomer components forming the acrylic polymer A (monomer mixture) or partially polymerized product thereof, and the acrylic polymer B, as essential components.

In the pressure-sensitive adhesive composition, if necessary, known additives such as a crosslinking agent, a crosslinking accelerator, a silane coupling agent, a tackifying resin (rosin derivative, polyterpene resin, petroleum resin, and oil-soluble phenol), an anti-aging agent, a filler, a colorant (dye or pigment), a UV absorbing agent, an antioxidant, a chain-transfer agent, a plasticizer, a softener, a surfactant and an antistatic agent may be used as long as the property of the present invention is not impaired.

By using the crosslinking agent, the acrylic polymer (particularly, acrylic polymer A) in the pressure-sensitive adhesive layer of the present invention can be crosslinked, and the gel fraction of the pressure-sensitive adhesive layer of the present invention can be controlled. As the crosslinking agent, examples thereof include an isocyanate-based crosslinking agent, an epoxy-based crosslinking agent, a melamine-based crosslinking agent, a peroxide-based crosslinking agent, an urea-based crosslinking agent, a metal alkoxide-based crosslinking agent, a metal chelate-based crosslinking agent, a metal salt-based crosslinking agent, a carbodiimide-based crosslinking agent, an oxazoline-based crosslinking agent, an aziridine-based crosslinking agent, an amine-based crosslinking agent and the like. Among the above crosslinking agents, the isocyanate-based crosslinking agent and the epoxy-based crosslinking agent are preferable, and the isocyanate-based crosslinking agent is more preferable, from the viewpoint of improvement of the anti-foaming release property. The crosslinking agent may be used either alone or in combination of two or more thereof.

As the isocyanate-based crosslinking agent (polyfunctional isocyanate compound), examples thereof include lower aliphatic polyisocyanates such as 1, 2-ethylene diisocyanate, 1,4-butylenediisocyanate and 1,6-hexamethylene diisocyanate; alicyclic polyisocyanates such as cyclopentylene diisocyanate, cyclohexylene diisocyanate, isophorone diisocyanate, hydrogenated tolylene diisocyanate and hydrogenated xylene diisocyanate; and aromatic polyisocyanates such as 2,4-tolylene diisocyanate, 2,6-tolylene diisocyanate, 4,4'-diphenylmethane diisocyanate and xylylene diisocyanate. The isocyanate-based crosslinking agent may be, for example, commercially available products such as a trimethylolpropane/tolylene diisocyanate adduct (manufactured by Nippon Polyurethane Industry Co., Ltd., trade name "CORONATE L"), a trimethylolpropane/hexamethylene diisocyanate adduct (manufactured by Nippon Polyurethane Industry Co., Ltd., trade name "CORONATE HL"), a trimethylolpropane/xylylene diisocyanate adduct (manufactured by Mitsui Chemicals Co., Ltd., trade name "TAKENATE D-110N").

As the epoxy-based crosslinking agent (polyfunctional epoxy compound), examples thereof include N,N,N',N'-tetraglycidyl-m-xylenediamine, diglycidyl aniline, 1, 3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic diglycidyl ester, triglycidyl-tris(2-hydroxyethyl)isocyanurate, resorcin diglycidyl ether, bisphenolS-diglycidyl ether and an epoxy-based resin having two or more epoxy groups in the molecule. The epoxy-based crosslinking agent may be, for example, commercially available products such as trade name "TETRAD C" manufactured by Mitsubishi Gas Chemical Company, Inc.

Though a content of the crosslinking agent in the pressure-sensitive adhesive composition is not particularly limited, it is preferably from 0.001 to 10 parts by weight, and more preferably from 0.01 to 5 parts by weight based on 100 parts by weight of the total amount of the monomer components forming the acrylic polymer A. When the content of the crosslinking agent is 0.001 parts by weight or more, there is a tendency that the anti-foaming release property is enhanced. On the other hand, when the content of the crosslinking agent is 10 parts by weight or less, there is a tendency that the pressure-sensitive adhesive layer has moderate flexibility, and a pressure-sensitive adhesive force is enhanced.

The pressure-sensitive adhesive composition may include a silane coupling agent for the purpose of improving an adhesion property to glass (in particular, adhesion reliability to glass at high temperature and high humidity environment). The silane coupling agent is not particularly limited, but γ-glycidoxypropyltrimethoxysilane, γ-glycidoxypropyltriethoxysilane, γ-aminopropyltrimethoxysilane and N-phenyl-aminopropyltrimethoxysilane are preferably exemplified. Among them, γ-glycidoxypropyltrimethoxysilane is preferable. As the silane coupling agent, for example, a commercially available product such as trade name "KBM-403" (manufactured by Shin-Etsu Chemical Co., Ltd.) may be used. The silane coupling agent may be used either alone or in combination of two or more thereof.

A content of the silane coupling agent in the pressure-sensitive adhesive composition is not particularly limited. However, from the standpoint of enhancing the adhesive reliability to glasses, in particular the standpoint of enhancing the adhesive reliability to glasses under a humidified environment, for example, the content of the silane coupling agent is preferably from 0.01 to 1 part by weight, and more preferably from 0.03 to 0.5 part by weight based on 100 parts by weight of the total amount of the monomer components forming the acrylic polymer A.

The pressure-sensitive adhesive included in the pressure-sensitive adhesive layer of the present invention may be a pressure-sensitive adhesive having any form. For example, the pressure-sensitive adhesive included in the pressure-sensitive adhesive layer of the present invention may be an emulsion type pressure-sensitive adhesive, a solvent type (solution type) pressure-sensitive adhesive, an active energy ray-curable pressure-sensitive adhesive, a hot melt type pressure-sensitive adhesive, or the like. Of these, a solvent type (solution type) pressure-sensitive adhesive and an active energy ray-curable pressure-sensitive adhesive are preferable. In particular, from the standpoint of productivity, the standpoint of environment, and the standpoint of easiness of obtaining a thick pressure-sensitive adhesive layer, the pressure-sensitive adhesive included in the pressure-sensitive adhesive layer of the present invention is preferably an active energy ray-curable pressure-sensitive adhesive.

A preparation method of the pressure-sensitive adhesive composition is not particularly limited. However, for example, the active energy ray-curable pressure-sensitive adhesive composition is prepared by mixing the monomer mixture used for forming the acrylic polymer A or partially polymerized product thereof, the acrylic polymer B, additives which are added as the need arises, and the like.

Though there are no particular limitations, the pressure-sensitive adhesive layer of the present invention is, for example, formed by applying (coating) the pressure-sensitive adhesive composition on a substrate or release liner, and drying and/or curing as needed. For example, the pressure-sensitive adhesive layer of the present invention is formed by applying (coating) the active energy ray-curable pressure-sensitive adhesive composition on a substrate or release liner, followed by irradiation with an active energy ray. In addition to the irradiation with an active energy ray, heating for drying may be conducted as the need arises.

In the applying (coating) of the pressure-sensitive adhesive composition, a known coating method can be used. For example, a general coater, such as a gravure roll coater, a reverse roll coater, a kiss roll coater, a dip roll coater, a bar coater, a knife coater, a spray coater, a comma coater and a direct coater, can be used.

From the standpoint of enhancing the step absorbability, a residual stress (residual stress after 180 seconds being measured in accordance with a tensile stress relaxation test under the conditions of a temperature of 23 °C and a strain of 300 %) of the pressure-sensitive adhesive layer of the present invention is 3.0 $N/cm^2$ or less (for example, from 0.5 to 3.0 $N/cm^2$), preferably from 0.5 to 2.5 $N/cm^2$, and more preferably from 0.5 to 2.0 $N/cm^2$.

The residual stress is measured in accordance with a tensile stress relaxation test. Specifically, using a tensile tester, a measuring sample (pressure-sensitive adhesive layer) is drawn under an environment of 23 °C until a strain (elongation) reaches 300 % (tensile speed: 200 m/min), the strain is kept, and a stress (tensile stress) ($N/cm^2$) after a lapse of 180 seconds from completion of the drawing is measured, the stress being able to be regarded as the residual stress. The measurement is, for example, performed by the method described in "(4) Tensile stress relaxation test (residual stress)" in the section of (Evaluation) as described later.

In addition, a gel fraction of the pressure-sensitive adhesive layer of the present invention is not particularly limited. However, from the standpoint of controlling the residual stress of the pressure-sensitive adhesive layer to a preferred range to enhance the step absorbability of the pressure-sensitive adhesive layer, the gel fraction of the pressure-sensitive adhesive layer of the present invention is preferably from 10 to 70 % (wt%), more preferably from 20 to 70 %, and further more preferably from 35 to 65 %.
Specifically, the gel fraction (solvent insoluble component) is, for example, a value calculated by "Method of measuring gel fraction" to be described below.

(Method of measuring gel fraction)

About 0.1 g of the pressure-sensitive adhesive layer is sampled, followed by wrapping with a porous tetrafluoroethylene sheet (trade name "NTF 1122", manufactured by Nitto Denko Corporation) having an average pore size of 0.2 μm, and it is tied up with a kite string and at this time, it is measured for the weight, and the weight measured is designated as the weight before immersion. The weight before immersion is the total weight of the pressure-sensitive adhesive layer (pressure-sensitive adhesive sampled above), the tetrafluoroethylene sheet and the kite string. The total weight of the tetrafluoroethylene sheet and the kite string is also measured, and this weight is designated as the wrapper weight.
Subsequently, the pressure-sensitive adhesive layer of the present invention wrapped with a tetrafluoroethylene sheet and tied up with a kite string (hereinafter referred to as the "sample") is put in a 50 ml-volume vessel filled with ethyl acetate, followed by allowing to stand still at 23°C for 7 days. The sample (after ethyl acetate treatment) is then taken out of the vessel, and it is transferred to an aluminum-made cup, followed by drying in a dryer at 130°C for 2 hours to remove ethyl acetate, and it is measured for the weight, and this weight is designated as the weight after immersion.
The gel fraction is calculated according to the following formula:

$$\text{Gel fraction (wt\%)} = ((X\text{-}Y)/(Z\text{-}Y)) \times 100$$

(wherein X is the weight after immersion, Y is the wrapper weight, and Z is the weight before immersion).
In addition, a storage elastic modulus at 23 °C of the pressure-sensitive adhesive layer of the present invention as measured in accordance with dynamic viscoelasticity measurement is not particularly limited. However, from the standpoint of controlling the residual stress of the pressure-sensitive adhesive layer to a preferred range to enhance the step absorbability of the pressure-sensitive adhesive layer, the storage elastic modulus at 23 °C of the pressure-sensitive adhesive layer of the present invention is preferably $1.2 \times 10^5$ Pa or less (for example, from $5.0 \times 10^4$ to $1.2 \times 10^5$ Pa), more preferably from $6.0 \times 10^4$ to $1.2 \times 10^5$ Pa, and still more preferably from $6.0 \times 10^4$ to $1.1 \times 10^5$ Pa. In the present specification, the storage elastic modulus at 23 °C as measured in accordance with dynamic viscoelasticity measurement is sometimes referred to as "storage elastic modulus (23 °C)" or "G' (23 °C)".
The storage elastic modulus is measured in accordance with dynamic viscoelasticity measurement. For example, the storage elastic modulus can be measured by laminating a plurality of the pressure-sensitive adhesive layers such that the pressure-sensitive adhesive layer has a thickness of about 1.5 mm and determining the modulus by using "Advanced Rheometric Expansion System (ARES)", manufactured by Rheometric Scientific under the conditions of a frequency of 1 Hz in the temperature range of from -70 to 200 °C at a temperature-rising rate of 5 °C/min in a shear mode.
Though a thickness of the pressure-sensitive adhesive layer of the present invention is not particularly limited, it is preferably from 50 to 600 μm, more preferably from 70 to 500 μm, and still more preferably from 70 to 250 μm. When the thickness of the pressure-sensitive adhesive layer of the present invention is less than 50 μm, there is a concern that the sheet cannot follow a step of an adherend. On the other hand, when the thickness of the pressure-sensitive adhesive layer of the present invention exceeds 600 μm, there is a concern that processability decreases.

[Double-sided pressure-sensitive adhesive sheet of the present invention]

The double-sided pressure-sensitive adhesive sheet of the present invention has at least one layer of the pressure-sensitive adhesive layer of the present invention. The double-sided pressure-sensitive adhesive sheet of the present invention may be a so-called "substrateless type double-sided pressure-sensitive adhesive sheet" which does not have a substrate (substrate layer) (hereinafter sometimes referred to as "substrateless pressure-sensitive adhesive sheet"), or may be a so-called "double-sided pressure-sensitive adhesive sheet with a substrate" having a substrate (hereinafter sometimes referred to as "double-sided pressure-sensitive adhesive sheet with substrate"). The foregoing "substrate (substrate layer)" does not include a separator (release liner) which is released when the pressure-sensitive adhesive sheet is used (laminated).

Examples of the substrateless double-sided pressure-sensitive adhesive sheet include a double-sided pressure-sensitive adhesive sheet consisting of the pressure-sensitive adhesive layer of the present invention; and a double-sided pressure-sensitive adhesive sheet composed of the pressure-sensitive adhesive layer of the present invention and the other pressure-sensitive adhesive layer as described above. In addition, examples of the double-sided pressure-sensitive adhesive sheet with substrate include a double-sided pressure-sensitive adhesive sheet having the pressure-sensitive adhesive sheet of the present invention on the both surfaces of the substrate; and a double-sided pressure-sensitive adhesive sheet having the pressure-sensitive adhesive layer of the present invention on one surface of the substrate and the other pressure-sensitive adhesive layer as described above on the other surface of the substrate.

Above all, from the standpoint of enhancing the optical characteristics such as transparency, the double-sided pressure-sensitive adhesive sheet of the present invention is preferably a substrateless double-sided pressure-sensitive adhesive sheet, and especially preferably a double-sided pressure-sensitive adhesive sheet consisting of the pressure-sensitive adhesive layer of the present invention. That is, the double-sided pressure-sensitive adhesive sheet of the present invention is especially preferably a substrateless double-sided pressure-sensitive adhesive sheet consisting of the pressure-sensitive adhesive layer of the present invention.

The double-sided pressure-sensitive adhesive sheet of the present invention may have, in addition to the pressure-sensitive adhesive layer of the present invention, the other pressure-sensitive adhesive layer, and the substrate, other layers (for example, an interlayer, an undercoat layer, etc.) so far as the effects of the present invention are not impaired.

In the double-sided pressure-sensitive adhesive sheet of the present invention, a separator (release liner) may be provided on the pressure-sensitive adhesive surface before the time of use. Though a form in which the pressure-sensitive adhesive surface of the double-sided pressure-sensitive adhesive sheet of the present invention is protected by a separator is not particularly limited, examples thereof include a form in which the respective pressure-sensitive adhesive surfaces are protected by two separators; and a form in which the respective pressure-sensitive adhesive surfaces are protected by one separator, the both surfaces of which are a release surface, and which is wound in a roll form. The separator is used as a protective material of the pressure-sensitive adhesive layer and is peeled off when laminated to an adherend. In the double-sided pressure-sensitive adhesive sheet of the present invention, the separator also plays a role as a support of the pressure-sensitive adhesive layer. The separator may be not necessarily provided.

The separator may be, but not particularly limited to, for example, a substrate having a release treated layer, a low adhesive substrate composed of a fluorine polymer, or a low adhesive substrate composed of a non-polar polymer. As the substrate having the release treated layer, examples thereof include a plastic film or paper whose surface is treated by a release agent such as silicon type, long-chaine alkyl type, fluorine type, and molybdenum sulfide. As the fluorine-based polymer in the low adhesive substrate composed of fluorine polymer, examples thereof include polytetrafluoroethylene, polychlorotrifluoroethylene, polyvinyl fluoride, polyvinylidene fluoride, a tetrafluoroethylene-hexafluoropropylene copolymer and a chlorofluoroethylene-vinylidene fluoride copolymer. As the non-polar polymer, examples thereof include an olefine-based resin (for example, polyethylene, polypropylene and the like). The separator can be formed by using a known/general method. The thickness of the separator is not particularly limited.

(Substrate)

The double-sided pressure-sensitive adhesive sheet of the present invention may also include a substrate. The substrate is not particularly limited, but examples thereof include various optical films such as a plastic film, an antireflection (AR) film, a polarizing plate and a retardation film. As materials of the plastic film and the like, examples thereof include plastic materials such as polyester resins such as polyethylene terephthalate (PET); acrylic resins such as polymethyl methacrylate (PMMA); polycarbonate; triacetyl cellulose (TAC); polysulfone; polyarylate; polyimide; polyvinyl chloride; polyvinyl acetate; polyethylene; polypropylene; ethylene-propylene copolymer; cyclic olefin-based polymer such as trade name "ARTON (cyclic olefin-based polymer; manufactured by JSR)" and trade name "ZEONOR (cyclic olefin-based polymer; manufactured by Nippon Zeon Co., Ltd.)". The plastic materials may be used either alone or in combination of two or more thereof. The "substrate" is a part laminated to an adherend together with the pressure-sensitive adhesive layer, when the pressure-sensitive adhesive sheet is laminated to the adherend (an optical member and the like). The separator (release liner) released in the use (lamination) of the pressure-sensitive adhesive sheet is not included in the "substrate".

The substrate is preferably a transparent substrate. The total light transmittance in a visible light wavelength region of the substrate (in accordance with JIS K7361-1) is not particularly limited, but is preferably 85% or more, and more preferably 88% or more. The haze of the substrate (in accordance with JIS K7136) is not particularly limited, but is preferably 1.5% or less, and more preferably 1.0% or less. The transparent substrate may be a PET film or a non-oriented film such as trade name "ARTON", and trade name "ZEONOR".

The thickness of the substrate is not particularly limited, but for example, is preferably 12 μm to 75 μm. The substrate may have a single layer shape or multilayer shape. On the surface of the substrate, for example, a known/general surface treatment such as a physical treatment such as a corona discharge treatment and a plasma treatment, and a chemical treatment such as an undercoat treatment, may be properly performed.

(Other pressure-sensitive adhesive layer)

The double-sided pressure-sensitive adhesive sheet of the present invention may also include other pressure-sensitive adhesive layer (pressure-sensitive adhesive layer other than the pressure-sensitive adhesive layer of the present invention). The other pressure-sensitive adhesive layer is not particularly limited, but examples thereof include a known/general pressure-sensitive adhesive layer that is formed of a known pressure-sensitive adhesive, such as an urethane-based pressure-sensitive adhesive, an acrylic pressure-sensitive adhesive, a rubber-based pressure-sensitive adhesive, a silicon-based pressure-sensitive adhesive, a polyester-based pressure-sensitive adhesive, a polyamide-based pressure-sensitive adhesive, an epoxy-based pressure-sensitive adhesive, a vinyl alkyl ether-based pressure-sensitive adhesive and a fluorine-based pressure-sensitive adhesive. The pressure-sensitive adhesive may be used either alone or in combination of two or more thereof.

Though a thickness (total thickness) of the double-sided pressure-sensitive adhesive sheet of the present invention is not particularly limited, it is preferably from 50 to 600 μm, and more preferably from 50 to 500 μm. When the thickness of the double-sided pressure-sensitive adhesive sheet is less than 50 μm, there is a concern that the stress generated during the lamination is hardly dispersed, and the sheet cannot follow the step of an adherend. On the other hand, when the thickness exceeds 600 μm, there is a concern that the transparency or appearance required as an optical pressure-sensitive adhesive sheet is adversely affected. The thickness of the double-sided pressure-sensitive adhesive sheet of the present invention is a thickness of from one pressure-sensitive adhesive surface to the other pressure-sensitive adhesive surface. In addition, the thickness of the double-sided pressure-sensitive adhesive sheet of the present invention does not include the thickness of the separator.

The haze of the double-sided pressure-sensitive adhesive sheet of the present invention (in accordance with JIS K7136) is not particularly limited, but is preferably 3.0% or less and more preferably 1.5% or less. By setting the haze to 3.0% or less, transparency or an appearance of the optical member or optical product to which the pressure-sensitive adhesive sheet is laminated becomes better. The haze can be measured by laminating the pressure-sensitive adhesive sheet, which has been left in a normal state (23°C, 50% RH) for at least 24 hours, and a separator has been released in the case of having a separator, to a slide glass (for example, total light transmittance of 91.8% and haze of 0.4%), thereby preparing a sample, and using a haze meter (manufactured by Murakami Color Research Laboratory Co., Ltd., trade name "HM-150").

The total light transmittance in a visible light wavelength region of the double-sided pressure-sensitive adhesive sheet of the present invention (in accordance with JIS K7361-1) is not particularly limited, but is preferably 87% or more, and more preferably 89% or more. By setting the total light transmittance to 87% or more, transparency or an appearance of the optical member or optical product to which the pressure-sensitive adhesive sheet is laminated becomes better. The total light transmittance can be measured by laminating the pressure-sensitive adhesive sheet, which has been left in a normal state (23°C, 50% RH) for at least 24 hours, in which a separator has been released in the case of having a separator, to a slide glass (for example, total light transmittance of 91.8% and haze of 0.4%), thereby preparing a sample, and using a haze meter (manufactured by Murakami Color Research Laboratory Co., Ltd., trade name "HM-150").

Though a manufacturing method of the double-sided pressure-sensitive adhesive sheet of the present invention is not particularly limited, examples thereof include known or general methods. For example, a substrateless double-sided pressure-sensitive adhesive sheet consisting of the pressure-sensitive adhesive layer of the present invention is prepared by forming the pressure-sensitive adhesive layer of the present invention with the use of the foregoing pressure-sensitive adhesive composition on the separator.

The double-sided pressure-sensitive adhesive sheet of the present invention is an optical pressure-sensitive adhesive sheet which is used for an optical application. More specifically, the double-sided pressure-sensitive adhesive sheet of the present invention is, for example, an optical pressure-sensitive adhesive sheet which is used for an application of laminating an optical member (for the lamination of an optical member) or for an application of manufacturing a product (optical product) in which an optical member is used.

The optical member refers to a member having an optical characteristic (for example, a polarized property, a photorefractive property, a light scattering property, a light reflective property, a light transmitting property, a light absorbing property, a light diffractive property, an optical rotation property and visibility). The optical member is not particularly limited so long as the optical member is a member having the optical characteristic, and a member constituting the device such as display (optical display) device (image display device) and input device, or a member used in the device are exemplified, and examples thereof include a polarizing plate, a wave plate, a retardation plate, an optical compensation film, a brightness enhancing film, a light guide plate, a reflective film, an anti-reflective film, a transparent conductive film (e.g. ITO film), a design film, a decoration film, a surface protective film, a prism, lens, a color filter, a transparent substrate, and a member in which these are laminated (collectively referred to as "a functional film" in some

cases). Each of the "plate" and the "film" include a plate shape, a film shape, and a sheet shape, and for example, the "polarizing film" includes a "polarizing plate" and a "polarizing sheet".

As the display device, examples thereof include a liquid crystal display device, an organic electroluminescence (EL) display device, a plasma display panel (PDP), an electronic paper and the like. As the input device, examples thereof include a touch panel and the like.

The optical member is not particularly limited, but for example, may be a member composed of glass, acrylic resin, polycarbonate, polyethyleneterephthalate, a metal thin film, or the like (for example, a sheet shape, film shape or plate shape of member). As described above, the "optical member" of the present invention also includes a member (a design film, a decoration film, a surface protective film or the like) for decoration or protection while maintaining visibility of the display device or the input device as an adherend.

A laminating aspect of the optical member with the double-sided pressure-sensitive adhesive sheet of the present invention is not particularly limited, but examples thereof include (1) an aspect of laminating optical members with the double-sided pressure-sensitive adhesive sheet of the present invention, and (2) an aspect of laminating an optical member to a member other than the optical member with the double-sided pressure-sensitive adhesive sheet of the present invention.

The double-sided pressure-sensitive adhesive sheet of the present invention is not only excellent in the step absorbability but excellent in the anti-foaming release property (anti-foaming reliability) because it has the pressure-sensitive adhesive layer of the invention.

(Pressure-sensitive adhesive optical member)

The pressure-sensitive adhesive optical member of the present invention has the double-sided pressure-sensitive adhesive sheet of the present invention on the surface of the foregoing optical member. The pressure-sensitive adhesive optical member of the present invention may have the double-sided pressure-sensitive adhesive sheet of the present invention on at least a part of the surface of the optical member, or may have the double-sided pressure-sensitive adhesive sheet of the present invention on the entirety of the surface of the optical member.

For example, the pressure-sensitive adhesive optical member in which an optical member in a sheet form (including a film form and a plate form) is used as the optical member has the double-sided pressure-sensitive adhesive sheet of the present invention on at least a part of the optical member in a sheet form. Specific examples of such a pressure-sensitive adhesive optical member include a pressure-sensitive adhesive optical member having the double-sided pressure-sensitive adhesive sheet of the present invention on one surface of an optical member in a sheet form; and a pressure-sensitive adhesive optical member having the double-sided pressure-sensitive adhesive sheet of the present invention on the both surfaces of an optical member in a sheet form.

The pressure-sensitive adhesive optical member of the invention is prepared by laminating the double-sided pressure-sensitive adhesive sheet of the present invention on at least a part of an optical member. For example, the pressure-sensitive adhesive optical member having the double-sided pressure-sensitive adhesive sheet of the present invention on one surface of an optical member in a sheet form is prepared by laminating the double-sided pressure-sensitive adhesive sheet of the present invention on one surface of an optical member in a sheet form.

Examples

The present invention is hereunder described in more detail by reference to the following Examples, but it should not be construed that the present invention is limited to these Examples. A blending composition when a prepolymer composition is prepared is shown in Table 2, and a blending composition of an acrylic pressure-sensitive adhesive composition is shown in Table 3.

(Preparation Example 1 of Prepolymer Composition (a))

A monomer mixture obtained by mixing 80 parts by weight of 2-ethylhexyl acrylate (2EHA), 11.5 parts by weight of 2-methoxyethyl acrylate (2MEA), and 8.5 parts by weight ofN-vinylpyrrolidone (NVP) was blended with, as photopolymerization initiators, 0.05 parts by weight of a trade name "IRGACURE 184" (manufactured by BASF Japan Ltd.) (Irg184) and 0.05 parts by weight of a trade name "IRGACURE 651" (manufactured by BASF Japan Ltd.) (Irg651). Thereafter, the mixture was irradiated with an ultraviolet ray until the viscosity (using a BH viscometer equipped with a No. 5 rotor at 10 rpm and at a measuring temperature of 30 °C) reached about 20 Pa.s, thereby preparing a prepolymer composition in which a part of the foregoing monomer components had been polymerized. The thus prepared prepolymer composition is designated as Prepolymer Composition (a).

(Preparation Example 2 of Prepolymer Composition (b))

A prepolymer composition was prepared in the same manner as in the foregoing Preparation Example 1 of Prepolymer Composition (a), except that a mixture obtained by mixing 85 parts by weight of 2-ethylhexyl acrylate (2EHA) and 15 parts by weight of N-vinylpyrrolidone (NVP) was used as the monomer mixture. The thus prepared prepolymer composition is designated as Prepolymer Composition (b).

(Preparation Example 3 of Prepolymer Composition (c))

A prepolymer composition was prepared in the same manner as in the foregoing Preparation Example 1 of Prepolymer Composition (a), except that a monomer mixture obtained by mixing 80 parts by weight of 2-ethylhexyl acrylate (2EHA). 11.5 parts by weight of 2-methoxyethyl acrylate (2MEA), 7.5 parts by weight of N-vinylpyrrolidone (NVP), and 1.5 parts by weight of hydroxyethyl acrylamide (HEAA) was used as the monomer mixture. The thus prepared prepolymer composition is designated as Prepolymer Composition (c).

Table 2

| | | Prepolymer composition | | |
|---|---|---|---|---|
| | | a | b | c |
| Blending amount of monomer component [parts by weight] | 2EHA | 80 | 85 | 80 |
| | 2MEA | 11.5 | | 11.5 |
| | NVP | 8.5 | 15 | 7.5 |
| | HEAA | | | 1.5 |
| Blending amount of photopolymerization initiator [parts by weight] | Irg651 | 0.05 | 0.05 | 0.05 |
| | Irg184 | 0.05 | 0.05 | 0.05 |

(Manufacturing Example 1 of Acrylic Polymer)

60 parts by weight of dicyclopentanyl methacrylate (DCPMA, methacrylic acid dicyclopentanyl ester) (a trade name: "FA-513M", manufactured by Hitachi Chemical Co., Ltd.) and 40 parts by weight of methyl methacrylate (MMA) as monomer components, 3.5 parts by weight of thioglycolic acid as a chain transfer agent, and 100 parts by weight of ethyl acetate as a polymerization solvent were put into a four-necked flask. Then, the contents were stirred at 70 °C for one hour in a nitrogen atmosphere, and thereafter, 0.2 parts by weight of 2,2'-azobisisobutyronitrile as a polymerization initiator was put thereinto. The contents were allowed to react at 70 °C for 2 hours, followed by reaction at 80 °C for 2 hours. Thereafter, the reaction liquid was put into an atmosphere at a temperature of 130 °C, and the ethyl acetate, the chain transfer agent, and the unreacted monomers were dried and removed, thereby obtaining a solid-shaped acrylic polymer. The obtained acrylic polymer had a weight average molecular weight of 4,000. Also, this acrylic polymer had a glass transition temperature (Tg) of 130 °C.
Incidentally, the acrylic polymer obtained in Manufacturing Example 1 of Acrylic Polymer is designated as "Acrylic Polymer (b1)".

(Example 1)

To 100 parts by weight of the foregoing Prepolymer Composition (c), 0.3 parts by weight of a silane coupling agent (a trade name: "KBM403", manufactured by Shin-Etsu Chemical Co., Ltd.), 0.065 parts by weight of dipentaerythritol hexaacrylate (DPHA), and 5 parts by weight of the foregoing Acrylic Polymer (b1) were added, thereby preparing an acrylic pressure-sensitive adhesive composition (composition for forming acrylic pressure-sensitive adhesive layer).
The foregoing acrylic pressure-sensitive adhesive composition was coated on a polyethylene terephthalate (PET) separator (a trade name: MRF75, manufactured by Mitsubishi Plastics, Inc.) such that a final thickness (thickness of the pressure-sensitive adhesive layer) was 175 μm, thereby forming a coating layer.
Subsequently, on the foregoing coating layer, a PET separator (a trade name: MRF38, manufactured by Mitsubishi Plastics, Inc.) was provided to cover the coating layer, thereby blocking oxygen.
Thereafter, an ultraviolet ray with an illuminance of 5 $mW/cm^2$ was irradiated from the upper surface (MRF38 side) of the above-obtained sheet (a laminate of MRF75/coating layer/MRF38) for 300 seconds with a black light (manufactured

by Toshiba Corporation). Furthermore, the sheet was subjected to a heat treatment for 2 minutes in a dryer at 120 °C to evaporate the residual monomers, thereby forming a pressure-sensitive adhesive layer (acrylic pressure-sensitive adhesive layer). Furthermore, the sheet was subjected to heat aging at 50 °C for one week, thereby obtaining a double-sided pressure-sensitive adhesive sheet (substrateless double-sided pressure-sensitive adhesive sheet) having a thickness of 175 μm.

In Example 1, among all of the acrylic polymers contained in the formed pressure-sensitive adhesive layer, an amount of the acrylic polymers other than the Acrylic Polymer (b1) (such acrylic polymers will be hereinafter sometimes referred to as "Acrylic Polymer (a1)") (this amount is a total amount of the monomer components forming the Acrylic Polymer (a1)) is 99.965 parts by weight; a content of the Acrylic Polymer (b1) is 5.002 parts by weight based on 100 parts by weight of the Acrylic Polymer (a1); and a content of the silane coupling agent is 0.300 parts by weight based on 100 parts by weight of the Acrylic Polymer (a1).

(Example 2)

A double-sided pressure-sensitive adhesive sheet (substrateless double-sided pressure-sensitive adhesive sheet) was obtained in the same manner as in Example 1, except that as shown in Table 3, 0.3 parts by weight of a silane coupling agent (a trade name: "KBM403", manufactured by Shin-Etsu Chemical Co., Ltd.), 0.04 parts by weight of dipentaerythritol hexaacrylate (DPHA), and 2 parts by weight of the foregoing Acrylic Polymer (b1) were added to 100 parts by weight of the foregoing Prepolymer Composition (c), thereby preparing an acrylic pressure-sensitive adhesive composition.

In Example 2, among all of the acrylic polymers contained in the formed pressure-sensitive adhesive layer, an amount of the acrylic polymers other than the Acrylic Polymer (b1) (such acrylic polymers will be hereinafter sometimes referred to as "Acrylic Polymer (a2)") (this amount is a total amount of the monomer components forming the Acrylic Polymer (a2)) is 99.94 parts by weight; a content of the Acrylic Polymer (b1) is 2.001 parts by weight based on 100 parts by weight of the Acrylic Polymer (a2); and a content of the silane coupling agent is 0.300 parts by weight based on 100 parts by weight of the Acrylic Polymer (a2).

(Example 3)

A double-sided pressure-sensitive adhesive sheet (substrateless double-sided pressure-sensitive adhesive sheet) was obtained in the same manner as in Example 1, except that as shown in Table 3, 0.3 parts by weight of a silane coupling agent (a trade name: "KBM403", manufactured by Shin-Etsu Chemical Co., Ltd.), 0.065 parts by weight of dipentaerythritol hexaacrylate (DPHA), and 5 parts by weight of the foregoing Acrylic Polymer (b1) were added to 100 parts by weight of the foregoing Prepolymer Composition (a), thereby preparing an acrylic pressure-sensitive adhesive composition.

In Example 3, among all of the acrylic polymers contained in the formed pressure-sensitive adhesive layer, an amount of the acrylic polymers other than the Acrylic Polymer (b1) (such acrylic polymers will be hereinafter sometimes referred to as "Acrylic Polymer (a3)") (this amount is a total amount of the monomer components forming the Acrylic Polymer (a3)) is 99.965 parts by weight; a content of the Acrylic Polymer (b1) is 5.001 parts by weight based on 100 parts by weight of the Acrylic Polymer (a3); and a content of the silane coupling agent is 0.300 parts by weight based on 100 parts by weight of the Acrylic Polymer (a3).

(Example 4)

A double-sided pressure-sensitive adhesive sheet (substrateless double-sided pressure-sensitive adhesive sheet) was obtained in the same manner as in Example 1, except that as shown in Table 3, 0.3 parts by weight of a silane coupling agent (a trade name: "KBM403", manufactured by Shin-Etsu Chemical Co., Ltd.), 0.100 parts by weight of dipentaerythritol hexaacrylate (DPHA), and 5 parts by weight of the foregoing Acrylic Polymer (b1) were added to 100 parts by weight of the foregoing Prepolymer Composition (a), thereby preparing an acrylic pressure-sensitive adhesive composition.

In Example 4, among all of the acrylic polymers contained in the formed pressure-sensitive adhesive layer, an amount of the acrylic polymers other than the Acrylic Polymer (b1) (such acrylic polymers will be hereinafter sometimes referred to as "Acrylic Polymer (a4)") (this amount is a total amount of the monomer components forming the Acrylic Polymer (a4)) is 100 parts by weight; a content of the Acrylic Polymer (b1) is 5.000 parts by weight based on 100 parts by weight of the Acrylic Polymer (a4); and a content of the silane coupling agent is 0.300 parts by weight based on 100 parts by weight of the Acrylic Polymer (a4).

(Example 5)

A double-sided pressure-sensitive adhesive sheet (substrateless double-sided pressure-sensitive adhesive sheet) was obtained in the same manner as in Example 1, except that as shown in Table 3, 0.3 parts by weight of a silane coupling agent (a trade name: "KBM403", manufactured by Shin-Etsu Chemical Co., Ltd.), 0.08 parts by weight of dipentaerythritol hexaacrylate (DPHA), and 10 parts by weight of the foregoing Acrylic Polymer (b1) were added to 100 parts by weight of the foregoing Prepolymer Composition (a), thereby preparing an acrylic pressure-sensitive adhesive composition.
In Example 5, among all of the acrylic polymers contained in the formed pressure-sensitive adhesive layer, an amount of the acrylic polymers other than the Acrylic Polymer (b1) (such acrylic polymers will be hereinafter sometimes referred to as "Acrylic Polymer (a5)") (this amount is a total amount of the monomer components forming the Acrylic Polymer (a5)) is 99.98 parts by weight; a content of the Acrylic Polymer (b1) is 10.002 parts by weight based on 100 parts by weight of the Acrylic Polymer (a5); and a content of the silane coupling agent is 0.300 parts by weight based on 100 parts by weight of the Acrylic Polymer (a5).

(Example 6)

A double-sided pressure-sensitive adhesive sheet (substrateless double-sided pressure-sensitive adhesive sheet) was obtained in the same manner as in Example 1, except that as shown in Table 3, 10 parts by weight of hydroxyethyl acrylate (HEA), 0.3 parts by weight of a silane coupling agent (a trade name: "KBM403'', manufactured by Shin-Etsu Chemical Co., Ltd.), 0.03 parts by weight of dipentaerythritol hexaacrylate (DPHA), and 5 parts by weight of the foregoing Acrylic Polymer (b1) were added to 100 parts by weight of the foregoing Prepolymer Composition (c), thereby preparing an acrylic pressure-sensitive adhesive composition.
In Example 6, among all of the acrylic polymers contained in the formed pressure-sensitive adhesive layer, an amount of the acrylic polymers other than the Acrylic Polymer (b1) (such acrylic polymers will be hereinafter sometimes referred to as "Acrylic Polymer (a6)") (this amount is a total amount of the monomer components forming the Acrylic Polymer (a6)) is 109.93 parts by weight; a content of the Acrylic Polymer (b1) is 4.548 parts by weight based on 100 parts by weight of the Acrylic Polymer (a6); and a content of the silane coupling agent is 0.273 parts by weight based on 100 parts by weight of the Acrylic Polymer (a6).

(Example 7)

A double-sided pressure-sensitive adhesive sheet (substrateless double-sided pressure-sensitive adhesive sheet) was obtained in the same manner as in Example 1, except that as shown in Table 3, 10 parts by weight of hydroxyethyl acrylate (HEA), 0.3 parts by weight of a silane coupling agent (a trade name: "KBM403", manufactured by Shin-Etsu Chemical Co., Ltd.), 0.04 parts by weight of dipentaerythritol hexaacrylate (DPHA), and 5 parts by weight of the foregoing Acrylic Polymer (b1) were added to 100 parts by weight of the foregoing Prepolymer Composition (c), thereby preparing an acrylic pressure-sensitive adhesive composition.
In Example 7, among all of the acrylic polymers contained in the formed pressure-sensitive adhesive layer, an amount of the acrylic polymers other than the Acrylic Polymer (b1) (such acrylic polymers will be hereinafter sometimes referred to as "Acrylic Polymer (a7)") (this amount is a total amount of the monomer components forming the Acrylic Polymer (a7)) is 109.94 parts by weight; a content of the Acrylic Polymer (b1) is 4.548 parts by weight based on 100 parts by weight of the Acrylic Polymer (a7); and a content of the silane coupling agent is 0.273 parts by weight based on 100 parts by weight of the Acrylic Polymer (a7).

(Example 8)

A double-sided pressure-sensitive adhesive sheet (substrateless double-sided pressure-sensitive adhesive sheet) was obtained in the same manner as in Example 1, except that as shown in Table 3, 0.3 parts by weight of a silane coupling agent (a trade name: "KBM403", manufactured by Shin-Etsu Chemical Co., Ltd.), 0.05 parts by weight of dipentaerythritol hexaacrylate (DPHA), and 5 parts by weight of the foregoing Acrylic Polymer (b1) were added to 100 parts by weight of the foregoing Prepolymer Composition (b), thereby preparing an acrylic pressure-sensitive adhesive composition.
In Example 8, among all of the acrylic polymers contained in the formed pressure-sensitive adhesive layer, an amount of the acrylic polymers other than the Acrylic Polymer (b1) (such acrylic polymers will be hereinafter sometimes referred to as "Acrylic Polymer (a8)") (this amount is a total amount of the monomer components forming the Acrylic Polymer (a8)) is 99.95 parts by weight; a content of the Acrylic Polymer (b1) is 5.002 parts by weight based on 100 parts by weight of the Acrylic Polymer (a8); and a content of the silane coupling agent is 0.300 parts by weight based on 100

parts by weight of the Acrylic Polymer (a8).

(Comparative Example 1)

A double-sided pressure-sensitive adhesive sheet (substrateless double-sided pressure-sensitive adhesive sheet) was obtained in the same manner as in Example 1, except that 0.3 parts by weight of a silane coupling agent (a trade name: "KBM403", manufactured by Shin-Etsu Chemical Co., Ltd.) and 0.05 parts by weight of dipentaerythritol hexaacrylate (DPHA) were added to 100 parts by weight of the foregoing Prepolymer Composition (c), thereby preparing an acrylic pressure-sensitive adhesive composition.
In Comparative Example 1, an amount of the acrylic polymers contained in the formed pressure-sensitive adhesive layer (such acrylic polymers will be hereinafter sometimes referred to as "Acrylic Polymer (a9)") (this amount is a total amount of the monomer components forming the Acrylic Polymer (a9)) is 99.95 parts by weight; and a content of the silane coupling agent is 0.300 parts by weight based on 100 parts by weight of the Acrylic Polymer (a9). In addition, in Comparative Example 1, the foregoing Acrylic Polymer (b1) is not used.

(Comparative Example 2)

A double-sided pressure-sensitive adhesive sheet (substrateless double-sided pressure-sensitive adhesive sheet) was obtained in the same manner as in Example 1, except that 0.3 parts by weight of a silane coupling agent (a trade name: "KBM403", manufactured by Shin-Etsu Chemical Co., Ltd.) and 0.03 parts by weight of dipentaerythritol hexaacrylate (DPHA) were added to 100 parts by weight of the foregoing Prepolymer Composition (c), thereby preparing an acrylic pressure-sensitive adhesive composition.
In Comparative Example 2, an amount of the acrylic polymers contained in the formed pressure-sensitive adhesive layer (such acrylic polymers will be hereinafter sometimes referred to as "Acrylic Polymer (a10)") (this amount is a total amount of the monomer components forming the Acrylic Polymer (a10)) is 99.93 parts by weight; and a content of the silane coupling agent is 0.300 parts by weight based on 100 parts by weight of the Acrylic Polymer (a10). In addition, in Comparative Example 2, the foregoing Acrylic Polymer (b1) is not used.

(Comparative Example 3)

A double-sided pressure-sensitive adhesive sheet (substrateless double-sided pressure-sensitive adhesive sheet) was obtained in the same manner as in Example 1, except that 0.3 parts by weight of a silane coupling agent (a trade name: "KBM403", manufactured by Shin-Etsu Chemical Co., Ltd.), 0.15 parts by weight of dipentaerythritol hexaacrylate (DPHA), and 5 parts by weight of the foregoing Acrylic Polymer (b1) were added to 100 parts by weight of the foregoing Prepolymer Composition (c), thereby preparing an acrylic pressure-sensitive adhesive composition.
In Comparative Example 3, among all of the acrylic polymers contained in the formed pressure-sensitive adhesive layer, an amount of the acrylic polymers other than the Acrylic Polymer (b1) (such acrylic polymers will be hereinafter sometimes referred to as "Acrylic Polymer (a11)") (this amount is a total amount of the monomer components forming the Acrylic Polymer (a11)) is 100.05 parts by weight; a content of the Acrylic Polymer (b1) is 4.998 parts by weight based on 100 parts by weight of the Acrylic Polymer (a11); and a content of the silane coupling agent is 0.299 parts by weight based on 100 parts by weight of the Acrylic Polymer (a11).

(Comparative Example 4)

A double-sided pressure-sensitive adhesive sheet (substrateless double-sided pressure-sensitive adhesive sheet) was obtained in the same manner as in Example 1, except that 0.3 parts by weight of a silane coupling agent (a trade name: "KBM403", manufactured by Shin-Etsu Chemical Co., Ltd.), 0.2 parts by weight of dipentaerythritol hexaacrylate (DPHA), and 5 parts by weight of the foregoing Acrylic Polymer (b1) were added to 100 parts by weight of the foregoing Prepolymer Composition (c), thereby preparing an acrylic pressure-sensitive adhesive composition.
In Comparative Example 4, among all of the acrylic polymers contained in the formed pressure-sensitive adhesive layer, an amount of the acrylic polymers other than the Acrylic Polymer (b1) (such acrylic polymers will be hereinafter sometimes referred to as "Acrylic Polymer (a12)") (this amount is a total amount of the monomer components forming the Acrylic Polymer (a12)) is 100.1 parts by weight; a content of the Acrylic Polymer (b1) is 4.995 parts by weight based on 100 parts by weight of the Acrylic Polymer (a12); and a content of the silane coupling agent is 0.299 parts by weight based on 100 parts by weight of the Acrylic Polymer (a12).

(Comparative Example 5)

A double-sided pressure-sensitive adhesive sheet (substrateless double-sided pressure-sensitive adhesive sheet) was obtained in the same manner as in Example 1, except that 0.3 parts by weight of a silane coupling agent (a trade name: "KBM403", manufactured by Shin-Etsu Chemical Co., Ltd.), 0.1 parts by weight of dipentaerythritol hexaacrylate (DPHA), and 5 parts by weight of the foregoing Acrylic Polymer (b1) were added to 140 parts by weight of the foregoing Prepolymer Composition (b), thereby preparing an acrylic pressure-sensitive adhesive composition.
In Comparative Example 5, among all of the acrylic polymers contained in the formed pressure-sensitive adhesive layer, an amount of the acrylic polymers other than the Acrylic Polymer (b1) (such acrylic polymers will be hereinafter sometimes referred to as "Acrylic Polymer (a13)") (this amount is a total amount of the monomer components forming the Acrylic Polymer (a13)) is 100 parts by weight; a content of the Acrylic Polymer (b1) is 5.000 parts by weight based on 100 parts by weight of the Acrylic Polymer (a13); and a content of the silane coupling agent is 0.300 parts by weight based on 100 parts by weight of the Acrylic Polymer (a13).

(Evaluation)

Each of the double-sided pressure-sensitive adhesive sheets obtained in the foregoing Examples and Comparative Examples was subjected to the following evaluations. The evaluation results are shown in Table 3.

(1) Gel fraction:

The gel fraction of the double-sided pressure-sensitive adhesive sheet was measured in accordance with the foregoing "Method for measuring gel fraction".

(2) Measurement of dynamic viscoelasticity [storage elastic modulus (23 °C)]:

The double-sided pressure-sensitive adhesive sheets were laminated to prepare a laminate having a thickness of about 1.5 mm. Then, this laminate was used as a measuring sample.
This measuring sample was measured using "Advanced Rheometric Expansion System (ARES)", manufactured by Rheometric Scientific under the conditions of a frequency of 1 Hz in the temperature range of from -70 to 200 °C at a temperature-rising rate of 5 °C/min, thereby computing a storage elastic modulus. The storage elastic modulus at a temperature of 23 °C was designated as "storage elastic modulus (23 °C)".

(3) Total light transmittance and haze:

One of the separators was peeled off, the double-sided pressure-sensitive adhesive sheet was laminated to a glass plate (lot No.: "S-1111 ", manufactured by Matsunami Glass Ind. Ltd., thickness: 1.3 mm, haze: 0.1 %, ground edges), and furthermore, the other separator was peeled off, thereby preparing a test piece.
The foregoing test piece was measured for total light transmittance in a visible light region and haze by using a haze meter (apparatus name: "HM-150", manufactured by Murakami Color Research Laboratory Co., Ltd.).

(4) Tensile stress relaxation test (residual stress):

A sheet piece having a length of 40 mm and a width of 40 mm (sheet piece of 40 mm × 40 mm) was cut out from the double-sided pressure-sensitive adhesive sheet.
Subsequently, the separator was peeled off from the sheet piece, and thereafter, the sheet piece was rolled up into a cylindrical shape in the width direction, which was then used as a measuring sample.
A tensile stress relaxation test was conducted using a tensile tester.
On the tensile tester, the measuring sample was set while adjusting a distance between chucks (distance between grippers) to 20 mm (initial distance between chucks was 20 mm).
The test piece was drawn by 60 mm (strain: 300 %) at a tensile speed of 200 mm/min and at a measuring temperature of 23 °C (the distance between chucks after drawing was 80 mm).
At the position after drawn by 60 mm, the chuck position was fixed for 180 seconds (the strain of 300% was kept), and the stress (tensile stress) ($N/cm^2$) after a lapse of 180 seconds was measured and defined as "residual stress".

(5) Step absorbability (printing step absorbability):

A sheet piece having a length of 100 mm and a width of 50 mm (sheet piece of 100 mm × 50 mm) was cut out

from the double-sided pressure-sensitive adhesive sheet.
Subsequently, one of the separators was peeled off from the thus obtained sheet piece, and the sheet piece was laminated to a glass plate (Blue plate cut product, manufactured by Matsunami Glass Ind. Ltd., length: 100 mm, width: 50 mm, thickness: 0.7 mm) using a hand roller under the conditions of a 2-kg roller and one reciprocation.
Subsequently, the other separator was peeled off from the sheet piece laminated to the glass plate, and a glass plate with printing step was laminated thereto under the following lamination conditions such that the surface onto which a printing step was applied and the pressure-sensitive adhesive layer came into contact with each other. There was thus obtained a sample for evaluation.

(Lamination conditions)

Surface pressure: 0.4 MPa
Degree of vacuum: 30 Pa
Laminating time: 2 seconds

The foregoing glass plate with printing step is a glass plate in which frame-shaped printing is applied onto one surface of a glass plate (Blue plate cut product, manufactured by Matsunami Glass Ind. Ltd., length: 100 mm, width: 50 mm, thickness: 0.7 mm).
In this glass plate with printing step, the thickness (thickness of the glass plate part) is 0.7 mm; the length is 100 mm; the width is 50 mm; the thickness of the printing part (height of the printing step) is from 23 μm to 28 μm. In addition, a diagrammatic view of this glass plate with printing step is shown in FIG. 1 and FIG. 2.
Subsequently, the foregoing sample for evaluation was placed in an autoclave, followed by an autoclave treatment under the conditions of a temperature of 50 °C and a pressure of 0.5 MPa for 15 minutes.
After the autoclave treatment, the sample for evaluation was taken out and visually observed to evaluate the step absorbability according to the following evaluation criteria.

(Evaluation criteria)

Good (A): No bubble remained.
Poor (B): A bubble remained.

(6) Anti-foaming reliability (anti-foaming release property):

A sheet piece having a length of 100 mm and a width of 50 mm (sheet piece of 100 mm × 50 mm) was cut out from the double-sided pressure-sensitive adhesive sheet.
Subsequently, one of the separators was peeled off from the thus obtained sheet piece, and the sheet piece was laminated to a glass plate (Blue plate cut product, manufactured by Matsunami Glass Ind. Ltd., length: 100 mm, width: 50 mm, thickness: 0.7 mm) using a hand roller under the conditions of a 2-kg roller and one reciprocation.
Subsequently, the other separator was peeled off from the sheet piece laminated to the glass plate, and an acrylic plate with printing step was laminated thereto under the following lamination conditions such that the surface onto which a printing step was present and the pressure-sensitive adhesive layer came into contact with each other. There was thus obtained a sample for evaluation.

(Lamination conditions)

Surface pressure: 0.4 MPa
Degree of vacuum: 30 Pa
Sticking time: 2 seconds

The foregoing acrylic plate with printing step is an acrylic plate in which frame-shaped printing is applied onto one surface of an acrylic plate (trade name "ACRYLITE MR-200", manufactured by Mitsubishi Rayon Co., Ltd.). In this acrylic plate with printing step, the thickness (thickness of the acrylic plate part) is 0.7 mm; the length is 100 mm; the width is 50 mm;

the thickness of the printing part (height of the printing step) is from 10 μm to 13 μm. In addition, a diagrammatic view of this acrylic plate with printing step is shown in FIG. 3 and FIG. 4.
Subsequently, the foregoing sample for evaluation was placed in an autoclave, followed by an autoclave treatment under the conditions of a temperature of 50 °C and a pressure of 0.5 MPa for 15 minutes.
After the autoclave treatment, the sample for evaluation was taken out of the autoclave. Subsequently, the thus taken-out sample for evaluation was placed in a dryer set up at a temperature of 85 °C and then allowed to stand for 24 hours. After standing for 24 hours, the sample for evaluation was taken out of the dryer and allowed to stand at room temperature (23 °C) for 30 minutes. Then, foaming (foaming including foaming to be caused due to an extraneous material) in the sample for evaluation was observed by a microscope, thereby evaluating the anti-foaming reliability according to the following evaluation criteria. The larger the numerical value in the following evaluation criteria, the more excellent the anti-foaming reliability is.

(Evaluation criteria)

Score 3: The number of foaming including foaming to be caused due to an extraneous material was 0 or 1.
Score 2: The number of foaming including foaming to be caused due to an extraneous material was 2 or 3.
Score 1: The number of foaming including foaming to be caused due to an extraneous material was 4 or 5.
Score 0: The number of foaming including foaming to be caused due to an extraneous material was 6 or more.

Table 3

| | Blending composition of acrylic pressure-sensitive adhesive composition | | | | | | Physical properties | | | | | | Evaluation | |
|---|---|---|---|---|---|---|---|---|---|---|---|---|---|---|
| | Prepolymer composition | | HEA [parts by weight] | Silane coupling agent [parts by weight] | DPHA [parts by weight] | Acrylic polymer (b1) [parts by weight] | Gel fraction [%] | Thickness [μm] | Storage elastic modulus (23 °C) [Pa] | Total light transmittance [%] | Haze [%] | Residual stress [N/cm$^2$] | Step absorbability | Anti-foaming reliability |
| | Kind | Blending amount [parts by weight] | | | | | | | | | | | | |
| Example 1 | c | 100 | 0 | 0.3 | 0.065 | 5 | 51 | 175 | $8.1 \times 10^4$ | 92 | 0.4 | 1.1 | A | 3 |
| Example 2 | c | 100 | 0 | 0.3 | 0.04 | 2 | 50 | 175 | $7.7 \times 10^4$ | 92 | 0.4 | 1.3 | A | 3 |
| Example 3 | a | 100 | 0 | 0.3 | 0.065 | 5 | 48 | 175 | $8.0 \times 10^4$ | 92 | 0.4 | 1.4 | A | 3 |
| Example 4 | a | 100 | 0 | 0.3 | 0.100 | 5 | 64 | 175 | $8.0 \times 10^4$ | 92 | 0.4 | 2.2 | A | 3 |
| Example 5 | a | 100 | 0 | 0.3 | 0.08 | 10 | 40 | 175 | $8.0 \times 10^4$ | 92 | 0.4 | 1.0 | A | 3 |
| Example 6 | c | 100 | 10 | 0.3 | 0.03 | 5 | 33 | 175 | $1.1 \times 10^5$ | 92 | 0.7 | 1.2 | A | 3 |
| Example 7 | c | 100 | 10 | 0.3 | 0.04 | 5 | 40 | 175 | $1.1 \times 10^5$ | 92 | 0.7 | 1.4 | A | 3 |
| Example 8 | b | 100 | 0 | 0.3 | 0.05 | 5 | 43 | 175 | $9.7 \times 10^4$ | 92 | 0.5 | 1.5 | A | 3 |
| Comparative Example 1 | c | 100 | 0 | 0.3 | 0.05 | 0 | 70 | 175 | $7.1 \times 10^4$ | 92 | 0.4 | 3.5 | B | 1 |
| Comparative Example 2 | c | 100 | 0 | 0.3 | 0.03 | 0 | 55 | 175 | $7.1 \times 10^4$ | 92 | 0.4 | 2.5 | A | 1 |
| Comparative Example 3 | c | 100 | 0 | 0.3 | 0.15 | 5 | 74 | 175 | $8.0 \times 10^4$ | 92 | 0.4 | 4.0 | B | 3 |
| Comparative Example 4 | c | 100 | 0 | 0.3 | 0.2 | 5 | 85 | 175 | $8.0 \times 10^4$ | 92 | 0.4 | 5.2 | B | 3 |
| Comparative Example 5 | b | 100 | 0 | 0.3 | 0.1 | 5 | 70 | 175 | $9.7 \times 10^4$ | 92 | 0.5 | 5.2 | B | 3 |

The double-sided pressure-sensitive adhesive sheets of the Examples were used for laminating to the glass plate and the glass plate with printing step in the evaluation of step absorbability, and it could be confirmed that these double-sided pressure-sensitive adhesive sheets of the Examples exhibited high step absorbability even when laminating rigid bodies. In addition, the double-sided pressure-sensitive adhesive sheets of the Examples were used for laminating to the glass plate and the acrylic plate with printing step in the evaluation of anti-foaming reliability, and it could be confirmed that these double-sided pressure-sensitive adhesive sheets of the Examples exhibited high anti-foaming reliability to plastics. The double-sided pressure-sensitive adhesive sheets of the Examples have high step absorbability and have excellent reliability to plastics.

While the invention has been described in detail and with reference to specific embodiments thereof, it will be apparent to one skilled in the art that various changes and modifications can be made therein without departing from the spirit and scope thereof.

This application is based on Japanese Patent Application No. 2011-138410 filed on June 22, 2011, the entire subject matter of which is incorporated herein by reference.

The present invention provides the following optical double-sided pressure-sensitive adhesive sheet and pressure-sensitive adhesive optical member.

(1) An optical double-sided pressure-sensitive adhesive sheet comprising a pressure-sensitive adhesive layer which contains an acrylic polymer A and an acrylic polymer B having a weight average molecular weight of from 1,000 to 30,000, and has a residual stress after 180 seconds of 3.0 $N/cm^2$ or less, the residual stress after 180 seconds being measured in accordance with a tensile stress relaxation test under the conditions of a temperature of 23 °C and a strain of 300 %.

(2) The optical double-sided pressure-sensitive adhesive sheet according to (1), wherein a content of the acrylic polymer B in the pressure-sensitive adhesive layer is 1 part by weight or more and less than 15 parts by weight based on 100 parts by weight of the acrylic polymer A.

(3) The optical double-sided pressure-sensitive adhesive sheet according to (1) or (2), wherein the acrylic polymer A is formed from a monomer component comprising an alkoxyalkyl acrylate as an essential monomer component.

(4) The optical double-sided pressure-sensitive adhesive sheet according to any one of (1) to (3), wherein the acrylic polymer A is formed from a monomer component comprising an alkyl (meth)acrylate having a linear or branched alkyl group as an essential monomer component.

(5) The optical double-sided pressure-sensitive adhesive sheet according to any one of (1) to (4), wherein the acrylic polymer B is formed from a monomer component comprising a (meth)acrylic acid ester having a cyclic structure in a molecule thereof and an alkyl (meth)acrylate having a linear or branched alkyl group, as essential monomer components.

(6) The optical double-sided pressure-sensitive adhesive sheet according to any one of (1) to (5), wherein the acrylic polymer A is formed by an active energy ray polymerization.

(7) The optical double-sided pressure-sensitive adhesive sheet according to any one of (1) to (6), which is a substrateless double-sided pressure-sensitive adhesive sheet consisting of the pressure-sensitive adhesive layer.

(8) The optical double-sided pressure-sensitive adhesive sheet according to any one of (1) to (7), which has a total thickness of from 50 to 600 μm.

(9) The optical double-sided pressure-sensitive adhesive sheet according to any one of (1) to (8), wherein the acrylic polymer A is formed from a monomer component comprising a nitrogen-containing monomer.

(10) A pressure-sensitive adhesive optical member comprising an optical member and the optical double-sided pressure-sensitive adhesive sheet according to any one of (1) to (9) on a surface of the optical member.

Description of Reference Numerals and Signs

1: Glass plate with printing step
2: Glass plate
3: Printing part
4: Acrylic plate with printing step
5: Acrylic plate
6: Printing part

## Claims

1. An optical double-sided pressure-sensitive adhesive sheet comprising a pressure-sensitive adhesive layer which contains an acrylic polymer A and an acrylic polymer B having a weight average molecular weight of from 1,000 to 30,000, and has a residual stress after 180 seconds of 3.0 $N/cm^2$ or less, the residual stress after 180 seconds being measured in accordance with a tensile stress relaxation test under the conditions of a temperature of 23 °C and a strain of 300 %.

2. The optical double-sided pressure-sensitive adhesive sheet according to claim 1, wherein a content of the acrylic polymer B in the pressure-sensitive adhesive layer is 1 part by weight or more and less than 1 parts by weight based on 100 parts by weight of the acrylic polymer A.

3. The optical double-sided pressure-sensitive adhesive sheet according to claim 1 or 2, wherein the acrylic polymer A is formed from a monomer component comprising an alkoxyalkyl acrylate as an essential monomer component.

4. The optical double-sided pressure-sensitive adhesive sheet according to any one of claim 1 to 3, wherein the acrylic polymer A is formed from a monomer component comprising an alkyl (meth)acrylate having a linear or branched alkyl group as an essential monomer component.

5. The optical double-sided pressure-sensitive adhesive sheet according to any one of claims 1 to 4, wherein the acrylic polymer B is formed from a monomer component comprising a (meth)acrylic acid ester having a cyclic structure in a molecule thereof and an alkyl (meth)acrylate having a linear or branched alkyl group, as essential monomer components.

6. The optical double-sided pressure-sensitive adhesive sheet according to any one of claims 1 to 5, wherein the acrylic polymer A is formed by an active energy ray polymerization.

7. The optical double-sided pressure-sensitive adhesive sheet according to any one of claims 1 to 6, which is a substrateless double-sided pressure-sensitive adhesive sheet consisting of the pressure-sensitive adhesive layer.

8. The optical double-sided pressure-sensitive adhesive sheet according to any one of claims 1 to 7, which has a total thickness of from 50 to 600 μm.

9. The optical double-sided pressure-sensitive adhesive sheet according to any one of claims 1 to 8, wherein the acrylic polymer A is formed from a monomer component comprising a nitrogen-containing monomer.

10. A pressure-sensitive adhesive optical member comprising an optical member and the optical double-sided pressure-sensitive adhesive sheet according to any one of claims 1 to 9 on a surface of the optical member.

FIG. 1

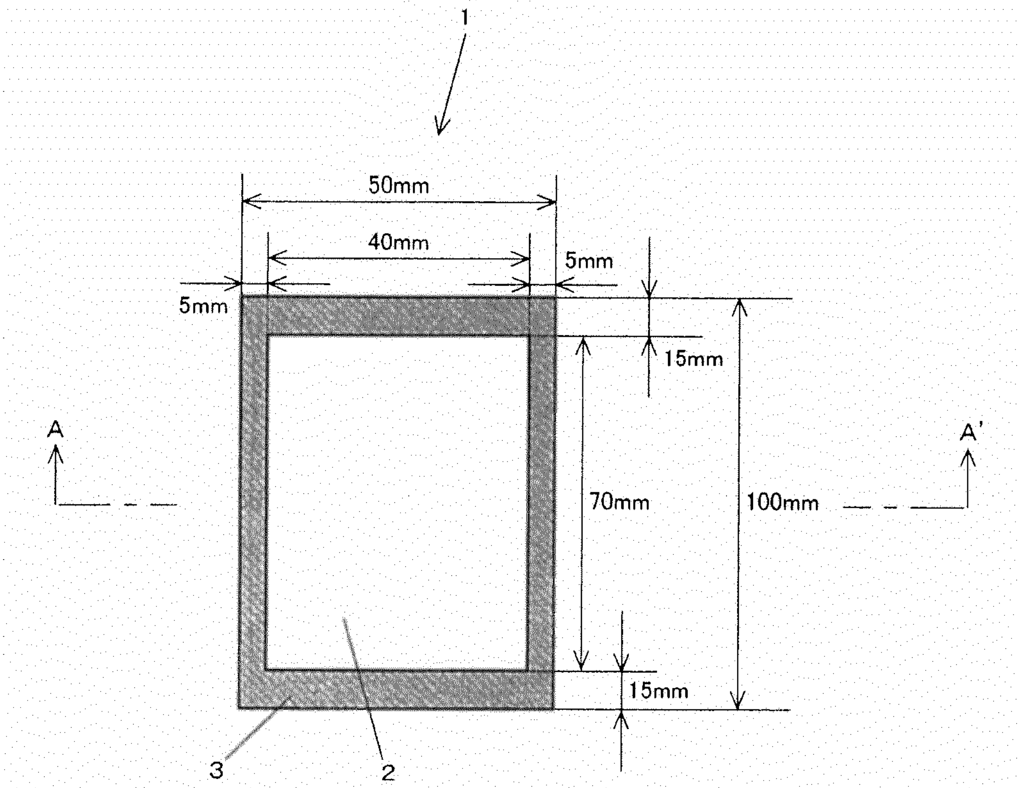


FIG. 2

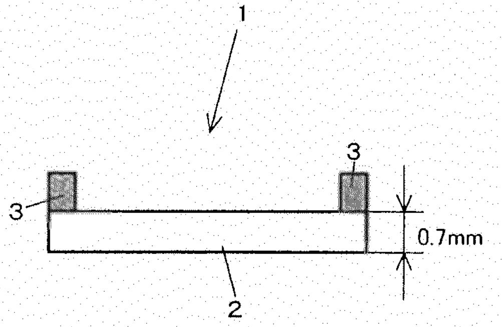

FIG. 3

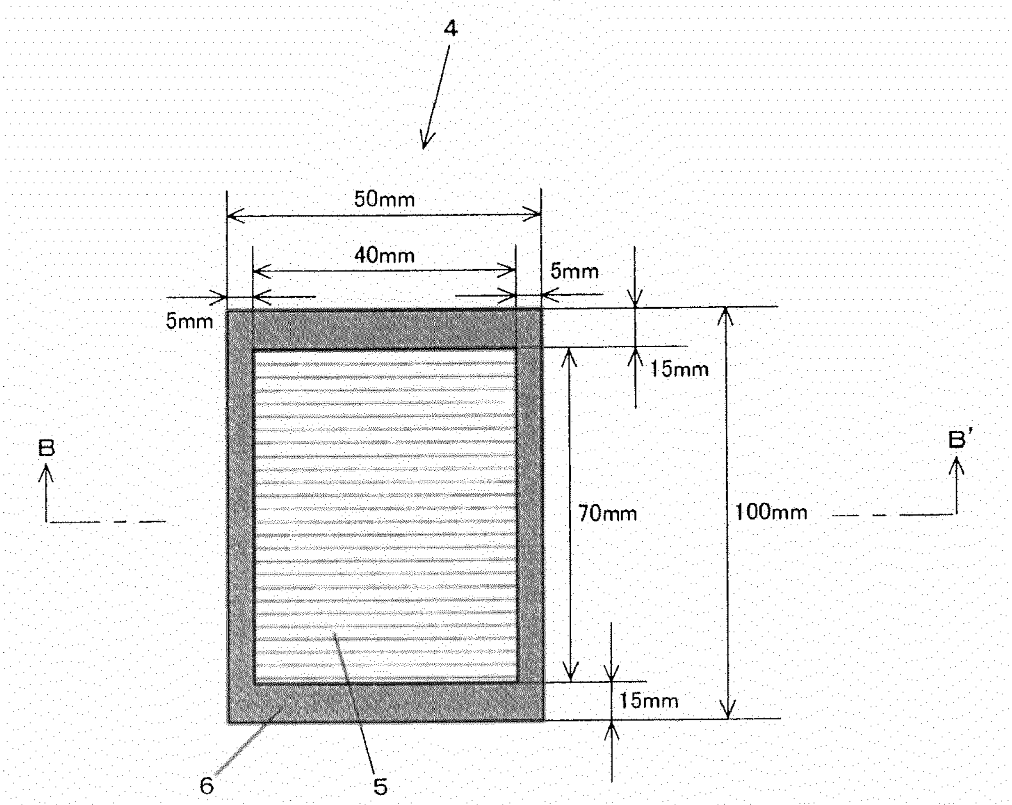


FIG. 4

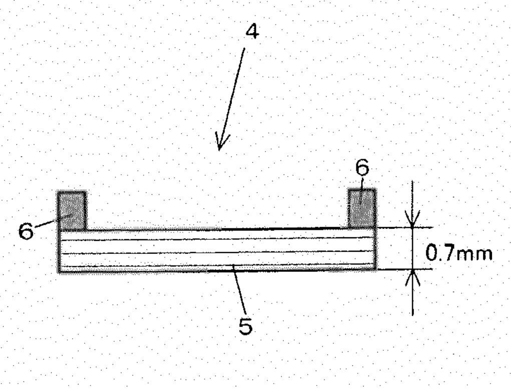

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003238915 A
- JP 2003342542 A
- JP 2004231723 A
- JP 2010189545 A
- JP 2007051271 A
- JP 2011138410 A


### Non-patent literature cited in the description


- Polymer Handbook. John Wiley & Sons, Inc, 1989